# EUROPEAN PATENT SPECIFICATION

(11) **EP 3 545 018 B1**
(45) Date of publication and mention of the grant of the patent: **19.02.2020**
(21) Application number: 18721247.7
(22) Date of filing: 13.04.2018
(51) Int. Cl.: C08G 64/08

(54) **SYNTHESIS OF A PHOSPHOROUS CONTAINING MONOMER AND THE INCORPORATION IN POLYCARBONATE BY INTERFACIAL POLYMERIZATION THEREOF**
SYNTHESE EINES PHOSPHORHALTIGEN MONOMERS UND EINSCHLUSS IN POLYCARBONAT DURCH GRENZFLÄCHENPOLYMERISATION DAVON
SYNTHÈSE D'UN MONOMÈRE CONTENANT DU PHOSPHORE ET INCORPORATION DANS DU POLYCARBONATE PAR POLYMÉRISATION INTERFACIALE DE CELUI-CI

(30) Priority: 14.04.2017 US 201762485518 P
(43) Date of publication of application: 02.10.2019
(73) Proprietor: SABIC Global Technologies B.V., 4612 PX Bergen op Zoom (NL)
(72) Inventor: CALVERAS, Jordi, Mt. Vernon, Indiana 47620-9367 (US)
(74) Representative: Balder IP Law, S.L.
(86) International application number: PCT/US2018/027479
(87) International publication number: WO 2018/191612

(56) References cited:
- EP-A2- 2 116 549
- EP-A2- 2 548 925
- WO-A1-2016/170468
- CN-A- 106 009 038
- JP-A- 2013 144 653

## Description

### BACKGROUND

This disclosure generally relates to copolycarbonates containing phosphinate bisphenol units, and their method of manufacture, as well as to uses thereof.

Polycarbonates are useful in the manufacture of articles and components for a wide range of applications, from automotive parts to components for electronic articles. For a number of applications, it is desirable to use polycarbonate compositions that provide thin, transparent, or low color articles having good flame retardance. This combination of properties can be difficult to achieve. Manufacture of thin articles, for examples those having a thickness of 4 millimeters (mm) or less, or even 1 mm or less is most efficient when the polycarbonate compositions have good flow.

Phosphorous-based flame retardants, such as phosphonates and phosphinates, have been incorporated into polycarbonate compositions to improve flame retardance properties. For example, JP Patent No. 2013144653 A, Intl. Pat. Pub. No. WO 2016/170468 A1, and CN Patent No. 106009038 A describe the use of derivatives of 9,10-dihydro-9-oxa-10-phosphaphenanthrene-10-oxide (DOPO) as flame retardants in polycarbonate compositions.

In EP 2116549 A2 the phosphorous-containing compounds such as DOPO are used as curing agents for epoxy resins to provide a flame resistant cured epoxy resin.

In EP 2548925 A2 the polycarbonate compositions include poly(block-phosphonato-esters) and poly(block-phosphonato-carbonates) copolymers to provide flame retardant materials and coatings. The compositions demonstrate improved impact strength, thermal stability, and flame retardance. The copolymers including the phosphonate moieties do not exhibit superior initial color and hydrostability.

There accordingly remains a need for polycarbonates having a good balance of optical, flame retardant, and performance properties.

### SUMMARY

A phosphinate copolycarbonate comprises units of the formula 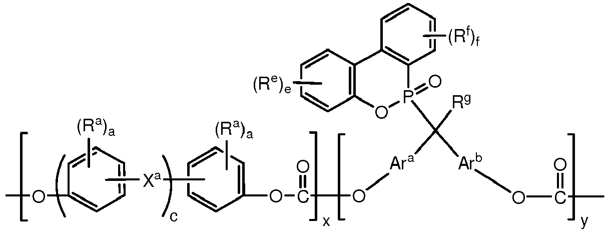 wherein each R^{a} is independently a halogen atom, C₁₋₁₀ alkyl, C₁₋₁₀ haloalkyl, C₁₋₁₂ alkoxy, C₆₋₁₀ aryl, or C₆₋₁₂ haloaryl, each X^{a} is independently a single bond, -O-, -S-, -S(O)-, -S(O)₂-, -C(O)-, C₃₋₁₈ cycloalkylidene; a C₁₋₂₅ alkylidene of the formula -C(R^{c})(R^{d})- wherein R^{c} and R^{d} are each independently hydrogen, C₁₋₁₂ alkyl, C₁₋₁₂ cycloalkyl, C₁₋₁₂ arylalkyl, C₁₋₁₂ heteroalkyl, or cyclic C₇₋₁₂ heteroarylalkyl; or a group of the formula -C(=R^{h})- wherein R^{h} is a divalent C₁₋₁₂ hydrocarbon group, R^{e} and R^{f} are independently a halogen atom, C₁₋₁₀ alkyl, C₁₋₁₀ haloalkyl, C₁₋₁₀ alkoxy, C₁₋₁₀ haloalkoxy, C₂₋₁₀ alkenyl, or C₃₋₁₀ cycloalkyl, each R^{g} is a substituted or unsubstituted C₆₋₁₈ aryl, C₁₋₁₀ alkyl, C₁₋₁₀ haloalkyl, C₁₋₁₀ alkoxy, C₁₋₁₀ haloalkoxy, C₂₋₁₀ alkenyl, C₃₋₁₀ cycloalkyl, C₆₋₁₀ aryl, or C₆₋₁₂ haloaryl, Ar^{a} and Ar^{b} are each independently the same or different C₆₋₁₈ aryl, a, e, and f are each independently 0 to 4, or 0 to 2, or 0, c is 0 or 1, and x and y represent the molar ratio of each unit in the phosphinate copolycarbonate, and are 0.5:99.5 to 99.5:0.5, or 1:99 to 99:1, or 10:90 to 90:10, or 20:80 to 80:20.

A process for the manufacture of the above described phosphinate copolycarbonate comprises copolymerizing an aromatic hydroxy compound and a phosphinate bisphenol of the formulas 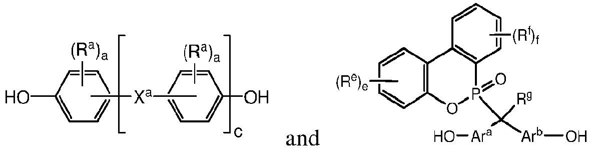 in the presence of a carbonyl source, under conditions effective provide the phosphinate copolycarbonate.

In another embodiment, a phosphinate copolycarbonate is manufactured by the above described method.

A copolycarbonate composition comprises the above described phosphinate copolycarbonate, optionally another polymer that this not the same as the copolycarbonate, and optionally an additive composition.

In another embodiment, an article comprises the above-described copolycarbonate composition.

In still another embodiment, a method for the manufacture of an article comprises molding, extruding, or shaping the above-described copolycarbonate composition into an article.

The above described and other features are exemplified by the following drawings, detailed description, examples, and claims.

### BRIEF DESCRIPTION OF THE DRAWINGS

The following is a brief description of the drawings wherein like elements are numbered alike and which are exemplary of the various embodiments described herein.
FIG. 1 is a graph of absorbance (arbitrary units, a.u.) versus wavelength (nanometers, nm) showing the results of a comparative color test for a phosphinate copolycarbonate and comparative polymers.
FIG. 2 is a graph of percent molecular weight (%Mw) versus time (hours, h) and shows the results of a comparative hydrostability test for the phosphinate copolycarbonates and comparative polymers.

### DETAILED DESCRIPTION

Surprisingly, it has now been found that a copolycarbonate comprising a copolycarbonate having units derived from a phosphinate bisphenol and another monomer, for example bisphenol A, optionally together with another polymer, can achieve desirable optical properties. In particular, the copolycarbonate composition can have good initial color and transmission after molding under standard conditions. The copolycarbonate composition can also have improved hydrostability and desirable flame performance.

The copolycarbonates are phosphinate copolycarbonates comprising units of formula (1) 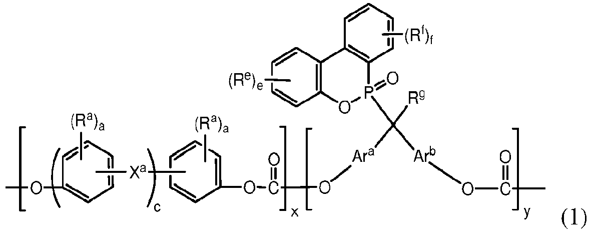 wherein each R^{a} is independently a halogen atom, C₁₋₁₀ alkyl, C₁₋₁₀ haloalkyl, C₁₋₁₂ alkoxy, C₆₋₁₀ aryl, or C₆₋₁₂ haloaryl; R^{e} and R^{f} are independently a halogen atom, C₁₋₁₀ alkyl, C₁₋₁₀ haloalkyl, C₁₋₁₀ alkoxy, C₁₋₁₀ haloalkoxy, C₂₋₁₀ alkenyl, or C₃₋₁₀ cycloalkyl; and each R^{g} is a substituted or unsubstituted C₆₋₁₈ aryl, C₁₋₁₀ alkyl, C₁₋₁₀ haloalkyl, C₁₋₁₀ alkoxy, C₁₋₁₀ haloalkoxy, C₂₋₁₀ alkenyl, C₃₋₁₀ cycloalkyl, C₆₋₁₀ aryl, or C₆₋₁₂ haloaryl; a, e, and f are each independently 0 to 4, or 0 to 2, or 0; c is 0 or 1; and x and y represent the molar ratio of each unit in the phosphinate copolycarbonate, and are 0.5:99.5 to 99.5:0.5, or 1:99 to 99:1, or 5:95 to 95:5, or 10:90 to 90:10, or 15:85 to 90:10, or 20:80 to 80:20, or 30:70 to 70:30, or 40:60 to 60:40, or 50:50 to 90:10, or 50:50 to 80:20. In an embodiment, R^{a}, R^{e}, and R^{f} are each independently a hydrogen atom, a halogen atom, C₁₋₆ alkyl, C₁₋₆ haloalkyl, or C₁₋₆ alkoxy; and R^{g} is a substituted or unsubstituted C₁₋₆ alkyl. In an embodiment, no bromine or chlorine is present in the compound, and in another embodiment no halogens are present.

In formula (1), each X^{a} is a bridging group connecting the two oxo-substituted aromatic groups, where the bridging group and the oxo substituent of each C₆ arylene group are disposed ortho, meta, or para to each other on the C₆ arylene group, a single bond, -O-, -S-, - S(O)-, -S(O)₂-, -C(O)-, C₃₋₁₈ cycloalkylidene; a C₁₋₂₅ alkylidene of the formula -C(R^{c})(R^{d})-wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{h})- wherein R^{h} is a divalent C₁₋₁₂ hydrocarbon group. Exemplary groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene. In another embodiment, X^{a} is a C₁₋₁₈ alkylene group, a C₃₋₁₈ cycloalkylene group, a fused C₆₋₁₈ cycloalkylene group, or a group of the formula -B ¹-W-B²- wherein B¹ and B² are the same or different C₁₋₆ alkylene group and W is a C₃₋₁₂ cycloalkylidene group or a C₆₋₁₆ arylene group.

In formula (1), Ar^{a} and Ar^{b} are each independently the same or different C₆₋₁₈ aryl. For example, Ar^{a} and Ar^{b} can each independently of the formulas 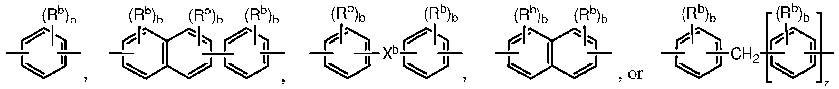 wherein in the foregoing formulas, each R^{b} is independently a halogen atom, hydroxyl, amino, nitro, thiol, carboxyl, sulphato, -COH, -NHCOCH₃, C₁₋₁₀ alkyl, C₁₋₁₀ haloalkyl, C₃₋₁₀ cycloalkyl, C₁₋₁₂ alkoxy, C₁₋₁₂ haloalkoxy, C₆₋₁₂ aryl, C₆₋₁₂ haloaryl, or glycidyl; X^{b} is a divalent bridging group connecting the two aromatic groups, where the divalent bonds of the bridging group and the other major substituent of each C₆ arylene group are disposed ortho, meta, or para to each other on the C₆ arylene group, for example, a covalent bond, -CH₂-(CH₂)ₚ-CH₂-, -C(O)-, -S(O₂)-, -O-, or -NH-; b is 0 to 4, or 0 to 2, or 0; and p and z are each independently 1 to 20, 1 to 10, or 1 to 6. As used herein, the "other major substituent of each C₆ arylene group" means the oxo or tertiary carbon substituent. In an embodiment, each R^{b} is independently a halogen atom, C₁₋₆ alkyl, C₁₋₆ haloalkyl, C₁₋₆ alkoxy, or C₁₋₆ haloalkoxy.

For example, the phosphinate copolycarbonate can be of formula (1a) 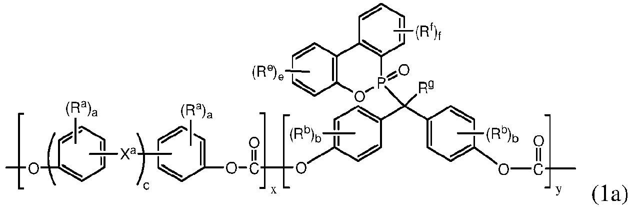 wherein R^{a}, X^{a}, R^{e}, R^{f}, R^{g}, a, c, e, and f are as defined in formula (1); each R^{b} is independently a halogen atom, hydroxyl, amino, nitro, thiol, carboxyl, sulphato, -COH, -NHCOCH₃, C₁₋₁₀ alkyl, C₁₋₁₀ haloalkyl, C₃₋₁₀ cycloalkyl, C₁₋₁₂ alkoxy, C₁₋₁₂ haloalkoxy, C₆₋₁₂ aryl, C₆₋₁₂ haloaryl, or glycidyl; and wherein x and y represent the molar ratio of each unit in the phosphinate copolycarbonate and are 0.5:99.5 to 99.5:0.5, or 1:99 to 99:1, or 5:95 to 95:5, or 10:90 to 90:10, or 15:85 to 90:10, or 20:80 to 80:20, or 30:70 to 70:30, or 40:60 to 60:40, or 50:50 to 90:10, or 50:50 to 80:20. In an embodiment, each R^{g} is a substituted or unsubstituted C₆₋₁₈ aryl, C₁₋₁₀ alkyl, C₁₋₁₀ haloalkyl, C₁₋₁₀ alkoxy, C₁₋₁₀ haloalkoxy, C₂₋₁₀ alkenyl, C₃₋₁₀ cycloalkyl, C₆₋₁₀ aryl, or C₆₋₁₂ haloaryl; a, e, and f are each independently 0 to 4, or 0 to 2, or 0; c is 0 or leach R^{b} is independently a halogen atom, hydroxyl, C₁₋₆ alkyl, C₁₋₆ haloalkyl, C₃₋₇ cycloalkyl, C₁₋₆ alkoxy, C₁₋₆ haloalkoxy, C₆₋₁₂ aryl, C₆₋₁₂ haloaryl, or glycidyl; each R^{g} is a substituted or unsubstituted C₆₋₁₂ aryl or C₁₋₆ alkyl, preferably an unsubstituted C₆ aryl or C₁₋₄ alkyl; a, b, e, and f are each independently 0 to 2, preferably 0; c is 1; and x and y represent the molar ratio of each unit in the phosphinate copolycarbonate and are 50:50 to 90:10, or 50:50 to 80:20.

In an embodiment in formulas (1) and (1a), each R^{a} is independently a halogen atom, C₁₋₃ alkyl, C₁₋₃ haloalkyl, C₁₋₃ alkoxy, C₆₋₁₀ aryl, or C₆₋₁₀ haloaryl; R^{e} and R^{f} are independently a halogen atom, C₁₋₃ alkyl, C₁₋₃ haloalkyl, C₁₋₃ alkoxy, C₁₋₃ haloalkoxy, or C₂₋₃ alkenyl; and an unsubstituted C₆ aryl or C₁₋₄ alkyl; a, b, e, and f are each independently 0 to 2, preferably 0; c is 1; and x and y represent the molar ratio of each unit in the phosphinate copolycarbonate and are 50:50 to 90:10, or 50:50 to 80:20.

In an embodiment, the phosphinate copolycarbonate can be of formula (1b) 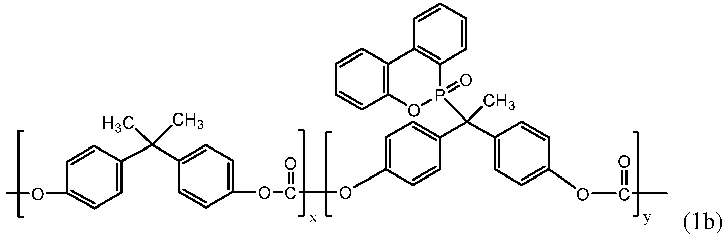 wherein x and y represent the molar ratio of each unit in the phosphinate copolycarbonate and are 0.5:99.5 to 99.5:0.5, or 1:99 to 99:1, or 5:95 to 95:5, or 10:90 to 90:10, or 15:85 to 90:10, or 20:80 to 80:20, or 30:70 to 70:30, or 40:60 to 60:40, or 50:50 to 90:10, or 50:50 to 80:20. In an embodiment, x and y represent the molar ratio of each unit in the phosphinate copolycarbonate and are 60:40 to 90:10, or 60:40 to 80:20.

The copolycarbonates can be obtained by copolymerizing an aromatic dihydroxy compound of formula (2) and a phosphinate bisphenol of formula (3) 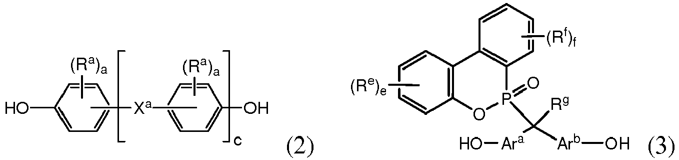 in the presence of a carbonate precursor, under conditions effective provide the phosphinate copolycarbonate, for example the phosphinate copolycarbonate of formula (1), wherein Ar^{a}, Ar^{b}, R^{a}, X^{a}, R^{e}, R^{f}, R^{g}, a, c, e, and f are as defined in formula (1). Exemplary carbonate precursors include a carbonyl halide such as carbonyl bromide or carbonyl chloride (phosgene), and diaryl carbonates, as detailed below.
Examples of aromatic dihydroxy compounds of formula (2) include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(4-hydroxyphenyl)cyclohexane, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, 2,2-bis(3-methyl-4-hydroxyphenyl)propane, 2 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 4,4'-dihydroxybenzophenone, 1,6-bis(4-hydroxyphenyl)-1,6-hexanedione, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 2,6-dihydroxydibenzo-p-dioxin, 2,6-dihydroxythianthrene, 2,7-dihydroxyphenoxathin; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like. Other aromatic dihydroxy compounds that can be used are listed in WO 2013/175448 A1, US 2014/0295363, and WO 2014/072923.

Specific aromatic dihydroxy compounds of formula (2) include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol). In an embodiment, the dihydroxy compound is bisphenol A and the phosphinate bisphenol is of formula (3b).

The phosphinate bisphenol can be obtained by reacting a hydrogen phosphinate of formula (5) 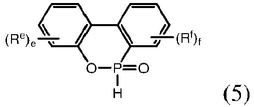 with a 4-hydroxy phenone of formula (6) and a phenol of formula (7) 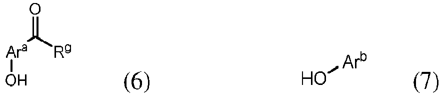 under conditions effective to provide the phosphinate bisphenol of formula (3) 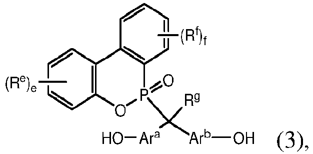 wherein Ar^{a}, Ar^{b}, R^{e}, R^{f}, R^{g}, e, and f are as defined in formula (1).

In an embodiment, the phosphinate bisphenol can be obtained by reacting a hydrogen phosphinate of formula (5) with a 4-hydroxy phenone of formula (6a) and a phenol of formula (7a) 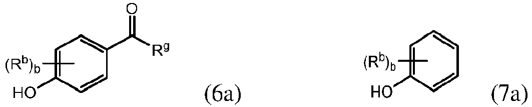 under conditions effective to provide the phosphinate bisphenol of formula (3a) 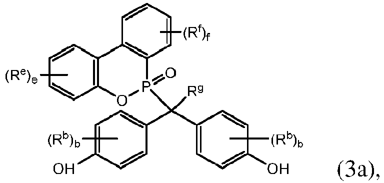 wherein R^{e}, R^{f}, R^{g}, a, c, e, and f are as defined in formula (1); each R^{b} is independently a halogen atom, hydroxyl, amino, nitro, thiol, carboxyl, sulphato, -COH, -NHCOCH₃, C₁₋₁₀ alkyl, C₁₋₁₀ haloalkyl, C₃₋₁₀ cycloalkyl, C₁₋₁₂ alkoxy, C₁₋₁₂ haloalkoxy, C₆₋₁₂ aryl, C₆₋₁₂ haloaryl, or glycidyl; and b is 0 to 4, or 0 to 2, or 0. In an embodiment, each R^{b} is independently a halogen atom, hydroxyl, C₁₋₆ alkyl, C₁₋₆ haloalkyl, C₃₋₇ cycloalkyl, C₁₋₆ alkoxy, C₁₋₆ haloalkoxy, C₆₋₁₂ aryl, C₆₋₁₂ haloaryl, or glycidyl; each R^{g} is a substituted or unsubstituted C₆₋₁₂ aryl or C₁₋₆ alkyl, preferably an unsubstituted C₆ aryl or C₁₋₄ alkyl; a, b, e, and f are each independently 0 to 2, preferably 0; and c is 0 or 1, preferably 1.

In another embodiment, the phosphinate bisphenol can be obtained by reacting a hydrogen phosphinate of formula (5) with a 4-hydroxy acetophenone of formula (6b) and a phenol of formula (7b) 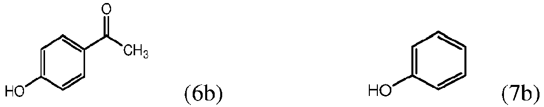 under conditions effective to provide the phosphinate bisphenol of formula (3b)

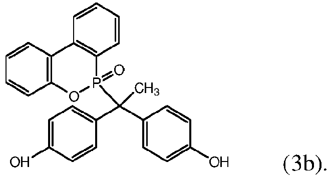

For example, effective conditions can include heating the reagents at 60 to 150°C for 6 to 24 hours in the presence of an acid catalyst. Exemplary acid catalysts include p-toluene sulfonic acid, methanesulfonic acid, acetic acid, trifluoromethanesulfonic acid, fluorosulfonic acid, sulfuric acid, orthanilic acid, 3-pyridinesulfonic acid, sulfanilic acid, hydrogen chloride, hydrogen bromide, hydrogen fluoride, hydrogen iodide, trifluoroacetic acid, nitric acid, and phosphoric acid. The amount of acid catalyst can be in the range of 0.1 to 10 wt%, preferably 1 to 5 wt%, based on the total weight of phenolic compounds. The reaction can be conducted in the absence or presence of solvent. Suitable solvents include ethoxyethanol, methoxyethanol, dioxane, 1-methoxy-2-propanol, propylene glycol monomethyl ether, or combinations thereof.

In an embodiment, the copolymerizing is an interfacial process or a melt process, as described below. In an embodiment, the copolymerizing is an interfacial process wherein a caustic solution of the phosphinate bisphenol is added to the aromatic dihydroxy compound after a portion of the carbonate precursor is contacted with the aromatic dihydroxy compound. As used herein, a caustic solution is a solution prepared from a solvent and a strong base. Suitable strong bases include, but are not limited to, NaOH and KOH.

The copolycarbonates can be manufactured by processes such as interfacial polymerization and melt polymerization. Although the reaction conditions for interfacial polymerization can vary, an exemplary process generally involves dissolving or dispersing a dihydroxy compound in aqueous NaOH or KOH, adding the resulting mixture to a water-immiscible solvent, and contacting the reactants with a carbonate precursor in the presence of a catalyst such as, for example, a tertiary amine or a phase transfer catalyst, under controlled pH conditions, e.g., 8 to 10.

The water-immiscible solvent can be, for example, methylene chloride, 1,2-dichloroethane, chlorobenzene, toluene, and the like. The carbonate precursor can be a carbonyl halide, a bishaloformate of a dihydroxy compound, or a diaryl carbonate. The carbonyl halide can be carbonyl bromide or carbonyl chloride (phosgene). The bischloroformate can be the bischloroformate of bisphenol A, hydroquinone, ethylene glycol, neopentyl glycol, or the like. The diaryl carbonate can be of formula (8) 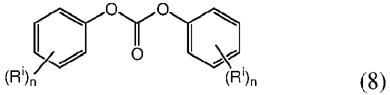 wherein n is an integer 1 to 3 and each R¹ is independently a linear or branched, optionally substituted C₁₋₃₄ alkyl (such as C₁₋₆ alkyl, or C₁₋₄ alkyl), C₁₋₃₄ alkoxy (such as C₁₋₆ alkoxy, or C₁₋₄ alkoxy), C₅₋₃₄ cycloalkyl, C₇₋₃₄ alkylaryl C₆₋₃₄ aryl, a halogen radical (such as a chlorine radical), or -C(=O)OR' wherein R' is H, linear or branched C₁₋₃₄ alkyl (such as C₁₋₆ alkyl, or C₁₋₄ alkyl), C₁₋₃₄ alkoxy (such as C₁₋₁₆ alkoxy, or C₁₋₄ alkoxy), C₅₋₃₄ cycloalkyl, C₇₋₃₄ alkylaryl, or C₆₋₃₄ aryl.

The diaryl carbonate can be diphenyl carbonate, methylphenyl-phenyl carbonates or di-(methylphenyl) carbonates (wherein the methyl group can be in any desired position on the phenyl rings), dimethylphenyl-phenyl carbonates or di-(dimethylphenyl) carbonates (wherein the methyl groups can be in any desired position on the phenyl rings), chlorophenyl-phenyl carbonates and di-(chlorophenyl) carbonates (wherein the chloro group can be in any desired position on the phenyl rings), 4-ethylphenyl-phenyl carbonate, di-(4-ethylphenyl) carbonate, 4-tritylphenyl-phenyl carbonate, di-(4-tritylphenyl) carbonate, methyl salicylate-phenyl carbonate, di-(methyl salicylate) carbonate, ethyl salicylate-phenyl carbonate, di-(ethyl salicylate) carbonate, n-propyl salicylate-phenyl carbonate, di-(n-propyl salicylate) carbonate, isopropyl salicylate-phenyl carbonate, di-(isopropyl salicylate) carbonate, n-butyl salicylate-phenyl carbonate, di-(n-butyl salicylate) carbonate, di-(tert-butyl salicylate) carbonate, di-(phenyl salicylate)-carbonate, di-(benzyl salicylate) carbonate, and the like. Other exemplary diaryl carbonates are listed in US2014/0275473 and WO2015/031724.

In an embodiment, the diaryl carbonate is diphenyl carbonate, or a diaryl carbonate wherein one or both aryl groups have an electron-withdrawing substituents, for example bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate. The diaryl carbonate and dihydroxy reactant can be introduced to, for example, a mixer or a reactor in a molar ratio of 2:1 to 1:2, specifically in a molar ratio of 1.5:1 to 1:1.5, more specifically in a molar ratio of 1.05:1 to 1:1.05, even more specifically in a molar ratio of 1:1. In an embodiment, the molar ratio of the diaryl carbonate to the dihydroxy compound when expressed to three decimal places is 0.996 or less, or 0.962 to 0.996, or 0.968 to 0.996, or 0.971 to 0.994.

Among tertiary amines that can be used as catalysts in interfacial polymerization are aliphatic tertiary amines such as triethylamine and tributylamine, cycloaliphatic tertiary amines such as N,N-diethyl-cyclohexylamine, and aromatic tertiary amines such as N,N-dimethylaniline. Among the phase transfer catalysts that can be used are catalysts of the formula (R³)₄Q⁺X, wherein each R³ is the same or different, and is a C₁₋₁₀ alkyl; Q is a nitrogen or phosphorus atom; and X is a halogen atom or a C₁₋₈ alkoxy or C₆₋₁₈ aryloxy. Exemplary phase transfer catalysts include (CH₃(CH₂)₃)₄NX, (CH₃(CH₂)₃)₄PX, (CH₃(CH₂)₅)₄NX, (CH₃(CH₂)₆)₄NX, (CH₃(CH₂)₄)₄NX, CH₃(CH₃(CH₂)₃)₃NX, and CH₃(CH₃(CH₂)₂)₃NX, wherein X is Cl⁻, Br⁻, a C₁₋₈ alkoxy or a C₆₋₁₈ aryloxy. An effective amount of a phase transfer catalyst can be 0.1 to 10 wt%, or 0.5 to 2 wt%, each based on the weight of dihydroxy compound in the phosgenation mixture.

The interfacial method described above can be suitably adapted to produce the copolycarbonates through the intermediate formation of a bischloroformate, for example bisphenol A bis(chloroformate). This method is sometimes called the bischloroformate polymerization method. Chloroformate oligomers are prepared by reacting a carbonate precursor, specifically phosgene, with the diol(s) in the absence of the tertiary amine catalyst, while the base is co-added to regulate the pH. The chloroformate oligomers can contain a mixture of monochloroformates, bischloroformates, and bisphenol terminated oligomers. After the chloroformate oligomers are generated, the phosgene can optionally be allowed to substantially condense or hydrolyze, then an end-capping agent is added to the chloroformate mixture. The reaction is allowed to proceed, and the tertiary amine catalyst is added to complete the reaction. The pH of the reaction mixture is usually from about 8.5 to about 10 prior to the addition of the phosgene. During the addition of the phosgene, the pH is maintained between about 6 and about 8, by using a basic solution (e.g. aqueous NaOH).

Alternatively, melt processes can be used to make the polycarbonates. In the melt polymerization process, polycarbonates can generally be prepared by co-reacting, in a molten state, a dihydroxy reactant as described above and a diaryl carbonate ester as described above in the presence of a transesterification catalyst. Conditions for melt process are described, for example, in WO2013/027165 and the references cited therein. Catalysts used in the melt polymerization can include an alpha catalyst and a beta catalyst. Alpha catalysts can comprise a source of alkali or alkaline earth ions and are typically more thermally stable and less volatile than beta catalysts. Beta catalysts are typically volatile and degrade at elevated temperatures, and can comprise a tranesterification catalyst of the formula (R³)₄Q⁺X as described above. Beta catalysts are therefore preferred for use at early low-temperature polymerization stages. The alpha catalyst can be used in an amount sufficient to provide 1 x 10⁻² to 1 x 10⁻⁸ moles, specifically, 1 x 10⁻⁴ to 1 x 10⁻⁷ moles of metal per mole of the dihydroxy compounds used. The amount of beta catalyst (e.g., organic ammonium or phosphonium salts) can be 1 x 10⁻² to 1 x 10⁻⁵, specifically 1 x 10⁻³ to 1 x 10⁻⁴ moles per total mole of the dihydroxy compounds in the reaction mixture. Quenching of the transesterification catalysts and any reactive catalysts residues with an acidic compound after polymerization is completed can also be useful in some melt polymerization processes. Among the many quenchers that can be used are alkyl sulfonic esters of the formula R⁸SO₃R⁹ wherein R⁸ is hydrogen, C₁-C₁₂ alkyl, C₆-C₁₈ aryl, or C₇-C₁₉ alkylaryl, and R⁹ is C₁-C₁₂ alkyl, C₆-C₁₈ aryl, or C₇-C₁₉ alkylaryl (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p-toluenesulfonate, in particular alkyl tosylates such as n-butyl tosylate).

An end-capping agent (also referred to as a chain stopper agent or chain terminating agent) can be included during polymerization to provide end groups. The end-capping agent (and thus end groups) is selected based on the desired properties of the polycarbonates. Exemplary end-capping agents are exemplified by monocyclic phenols such as phenol and C₁-C₂₂ alkyl-substituted phenols such as p-cumyl-phenol, resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁-C₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

] The copolycarbonates can comprise 0.5 to 99.5 mole percent (mol%), or 1 to 99 mol%, or 5 to 95 mol%, or 10 to 90 mol%, or 20 to 80 mol%, or 30 to 70 mol%, or 40 to 60 mol% of phosphinate bisphenol carbonate units, and 0.5 to 99.5 mol%, or 1 to 99 mol% or 5 to 95 mol%, or 10 to 90 mol%, or 20 to 80 mol%, or 30 to 70 mol%, or 40 to 60 mol% of carbonate units derived from the aromatic dihydroxy compound (e.g., bisphenol A carbonate units), each based on the total number of carbonate units in the copolycarbonate. In an embodiment, the copolycarbonates comprise 10 to 85 mol% of the phosphinate bisphenol carbonate units and 15 to 90 mol% of carbonate units derived from the aromatic dihydroxy compound, each based on the total number of carbonate units in the copolycarbonate. Preferably, the copolycarbonates comprise 10 to 50 mol% of the phosphinate bisphenol carbonate units 50 to 90 mol% of carbonate units derived from the aromatic dihydroxy compound, each based on the total number of carbonate units in the copolycarbonate. It is also possible to have three, four, or more different types of carbonate units.

In an embodiment, the copolycarbonates are highly random copolymers, which have less than 15 mol% of the phosphinate bisphenol carbonate units directly coupled to another phosphinate bisphenol carbonate unit based on the total number of carbonate units in the copolycarbonate. The molar percent can be determined by nuclear magnetic resonance spectroscopy (¹H NMR). Without wishing to be bound by theory, it is believed that by keeping the randomness of the polymer, the properties of the polymer remains consistent from batch to batch.

In an embodiment, the phosphinate copolycarbonate has a weight average molecular weight (Mw) of 10,000 to 40,000 grams per mole (g/mol), or 15,000 to 30,000 g/mol, when measured by gel permeation chromatography (GPC) using a crosslinked styrenedivinylbenzene column and calibrated to bisphenol A homopolycarbonate references. GPC samples are prepared at a concentration of 1 mg per ml, and are eluted at a flow rate of 1.5 ml per minute.

In another embodiment, the phosphinate copolycarbonate has a UL94 rating of V0 at a thickness of 1.0 millimeters, at a thickness of 0.8 millimeters, or at a thickness of 0.4 millimeters, as measured by the UL94 flammability test.

In still another embodiment, the phosphinate copolycarbonate has an absorbance at 400 nanometers of less than 0.5, or less than 0.25, or less than 0.1, at a concentration of 500 milligrams per milliliter in dichloromethane and at a path length of 10 cm, as measured by ultraviolet-visible (UV-vis) absorbance spectroscopy.

The copolycarbonates can have a high glass transition temperature (Tg). The Tg of the copolycarbonates can be 120 to 230°C, or 135 to 210°C, or 145 to 190°C, determined by differential scanning calorimetry (DSC) as per ASTM D3418 with a 20°C/min heating rate.

The heat deflection temperature (HDT) of the copolycarbonates can be 100 to 230°C, or 155 to 260°C, or 175 to 220°C, measured flat on a 80 x 10 x 4 mm bar with a 64 mm span at 0.45 MPa according to ISO 75/Bf.

The copolycarbonates can have high Vicat softening temperature. In an embodiment, the copolycarbonates can have a Vicat B120 of 150 to 250 °C, or 160 to 255 °C, or 180 to 225 °C, measured according to ISO 306.

In an embodiment, a copolycarbonate composition comprises the phosphinate copolycarbonate described herein, optionally another polymer that this not the same as the phosphinate copolycarbonate, and optionally an additive composition.

Examples of optional polymers include polyacetals (e.g., polyoxyethylene and polyoxymethylene), poly(C₁₋₆alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylene sulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polyethylene terephthalates, polybutylene terephthalates, polyarylates, and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide-siloxane copolymers), poly(C₁₋₆alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene-alphaolefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination thereof optional polymers. In some embodiments, the optional polymer comprises a polycarbonate, a polyetherimide, a polyimide, a polysulfone, a polyethersulfone, a polyphenylene sulfone, a polyarylene ether, a polyetherether ketone, a polyamide, or a combination thereof, preferably a polycarbonate, a polyetherimide, or a combination thereof.

The optional polymer can be present in an amount of 1 to 99 wt%, or 1 to 95 wt%, or 10 to 90 wt%, or 20 to 80 wt%, or 30 to 60 wt%, or 5 to 50 wt%, or 50 to 95 wt%, each based on the total weight of the copolycarbonate composition.

In an embodiment, the optional polymer is a polycarbonate different from the phosphinate copolycarbonate, for example a polycarbonate homopolymer such as a bisphenol A polycarbonate homopolymer. The bisphenol A polycarbonate homopolymer can be linear, having a weight average molecular weight (Mw) of 10 to 100 kg/mol, or 15 to 50 kg/mol, or 17 to 35 kg/mol, measured as described above. The preferred bisphenol A homopolycarbonates are also transparent in the absence of any light diffusers or other fillers. For example, a molded article of the bisphenol A homopolycarbonate can have transmission level greater than or equal to 90.0% at 2.5 millimeter (mm) thickness as measured by ASTM D1003-00, Procedure A, measured, e.g., using a HAZE-GUARD DUAL from BYK-Gardner, using and integrating sphere (0°/diffuse geometry), wherein the spectral sensitivity conforms to the International Commission on Illumination (CIE) standard spectral value under standard lamp D65.

More than one bisphenol A polycarbonate homopolymer can be present. For example, the copolycarbonate compositions can comprise a first bisphenol A polycarbonate homopolymer having a weight average molecular weight of 20 to 25 kg/mol and a second bisphenol A polycarbonate homopolymer having a weight average molecular weight of 28 to 32 kg/mol, or a second bisphenol A polycarbonate homopolymer having a weight average molecular weight of 16 to 20 kg/mol, each measured by GPC using BPA homopolycarbonate standards as described above. The weight ratio of the first bisphenol A polycarbonate homopolymer relative to the second bisphenol A polycarbonate homopolymer can be 10:1 to 1:10, or 5:1 to 1: 5, or 3:1 to 1:3 or 2:1 to 1:2. The polycarbonate homopolymer can be present in an amount of 10 to 90 wt%, preferably 20 to 80 wt% or 30 to 60 wt% based on the total weight of the copolycarbonate composition.

In a specific embodiment, the optional polymer is a linear homopolymer containing bisphenol A carbonate units (BPA-PC), commercially available under the trade name LEXAN from SABIC; or a branched, cyanophenol end-capped bisphenol A homopolycarbonate produced via interfacial polymerization, containing 3 mol% 1,1,1-tris(4-hydroxyphenyl)ethane (THPE) branching agent, commercially available under the trade name LEXAN CFR from SABIC.

To further enhance the optical properties of the copolycarbonate compositions, the polymers can be essentially free of certain metal ions, anions, and low molecular weight molecules (less than 150 g/mol). In an embodiment, the copolycarbonates comprise less than 2 ppm of each of triethyl amine, calcium ions, magnesium ions, potassium ions, iron ions, and chloride ions.

The copolycarbonate compositions can further include an optional additive, including one or more additives ordinarily incorporated into polymer compositions of this type, with the proviso that the additive is selected so as to not significantly adversely affect the desired properties of the copolycarbonate composition, in particular melt flow, thermal, transparency, and surface properties. Such additives can be mixed at a suitable time during the mixing of the components for forming the composition. Additives include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, anti-drip agents, and impact modifiers. In an embodiment, the copolycarbonate composition further comprises a processing aid, a heat stabilizer, an ultraviolet light absorber, a colorant, a flame retardant, an impact modifier, or a combination thereof. A combination of additives can be used, for example a combination of a heat stabilizer, mold release agent, and ultraviolet light stabilizer. In general, the additives are used in the amounts generally known to be effective. For example, the total amount of the additives (other than any impact modifier, filler, or reinforcing agents) can be 0 to 5 wt% or 0.01 to 5 wt%, based on the total weight of the copolycarbonate composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or a combination thereof. Antioxidants are used in amounts of 0.01 to 0.1 parts by weight, based on 100 parts by weight of the total composition, excluding any filler.

Heat stabilizer additives include organophosphites such as triphenyl phosphite, tris-(2,6-dimethylphenyl)phosphite, tris-(mixed mono-and di-nonylphenyl)phosphite; phosphonates such as dimethylbenzene phosphonate, phosphates such as trimethyl phosphate, or a combinations thereof. Heat stabilizers are used in amounts of 0.01 to 0.1 parts by weight, based on 100 parts by weight of the total composition, excluding any filler.

Light stabilizers, including ultraviolet light (UV) absorbers, can also be used. Light stabilizers include benzotriazoles such as 2-(2-hydroxy-5-methylphenyl)benzotriazole and 2-(2-hydroxy-5-tert-octylphenyl)-benzotriazole, 2-hydroxy-4-n-octoxy benzophenone, or a combination thereof. Light stabilizers are used in amounts of 0.01 to 5 parts by weight, based on 100 parts by weight of the copolycarbonate composition, excluding any filler.

UV absorbing additives include hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]-5-(octyloxy)-phenol (CYASORB 1164); 2,2'-(1,4- phenylene)bis(4H-3,1-benzoxazin-4-one) (CYASORB UV-3638); 1,3-bis[(2-cyano-3,3-diphenylacryloyl)oxy]-2,2-bis[[(2-cyano-3, 3-diphenylacryloyl)oxy]methyl]propane (UVINUL 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; phenol, 2-(2H-benzotriazol-2-yl)-4,6-bis(1-methyl-1-phenylethyl)- (TINUVIN 234); BCAP bismalonate from Clariant; nano-size inorganic materials such as titanium oxide, cerium oxide, and zinc oxide, all with particle size less than or equal to 100 nanometers; or a combination thereof. UV absorbers are used in amounts of 0.01 to 5 parts by weight, based on 100 parts by weight of the total composition, excluding any filler.

Flame retardants can also be used. Flame retardants include flame retardant salts such as alkali metal salts of perfluorinated C₁₁₆ alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complex such as Li₃AlF₆, BaSiF6, KBF4, K₃AlF₆, KAlF₄, K₂SiF₆, or Na₃AlF₆ or the like. Rimar salt and KSS and NATS, alone or in combination with other flame retardants, are particularly useful in the compositions disclosed herein. Flame retardant salts are typically used in amounts of 0.01 to 1.0 parts by weight, based on 100 parts by weight of the copolycarbonate composition.

Organophosphorus flame retardants can be used. Organophosphorus compounds include aromatic organophosphorus compounds having at least one organic aromatic group and at least one phosphorus-containing group, as well as organic compounds having at least one phosphorus-nitrogen bond.

In the aromatic organophosphorus compounds that have at least one organic aromatic group, the aromatic group can be a substituted or unsubstituted C₃₋₃₀ group containing one or more of a monocyclic or polycyclic aromatic moiety (which can optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group can be directly bonded to the phosphorus-containing group, or bonded via another moiety, for example an alkylene group. The aromatic moiety of the aromatic group can be directly bonded to the phosphorus-containing group, or bonded via another moiety, for example an alkylene group. In an embodiment the aromatic group is the same as an aromatic group of the polycarbonate backbone, such as a bisphenol group (e.g., bisphenol A), a monoarylene group (e.g., a 1,3-phenylene or a 1,4-phenylene), or a combination thereof.

The phosphorus-containing group can be a phosphate (P(=O)(OR)₃), phosphite (P(OR)3), phosphonate (RP(=O)(OR)₂), phosphinate (R₂P(=O)(OR)), phosphine oxide (R₃P(=O)), or phosphine (R3P), wherein each R in the foregoing phosphorus-containing groups can be the same or different, provided that at least one R is an aromatic group. A combination of different phosphorus-containing groups can be used. The aromatic group can be directly or indirectly bonded to the phosphorus, or to an oxygen of the phosphorus-containing group (i.e., an ester).

In an embodiment the aromatic organophosphorus compound is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups can be joined together to provide a cyclic group. In some embodiments G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below 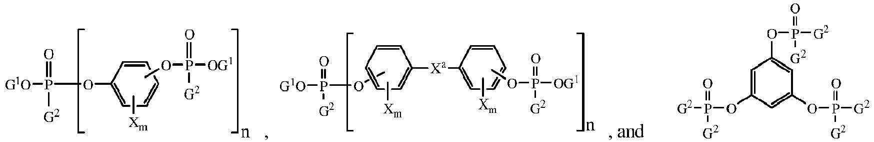 wherein each G¹ is independently a C₁₋₃₀ hydrocarbyl; each G² is independently a C₁₋₃₀ hydrocarbyl or hydrocarbyloxy; each X is independently a bromine or chlorine; m is 0 to 4, and n is 1 to 30. Di- or polyfunctional aromatic phosphorus-containing compounds of this type include resorcinol tetraphenyl diphosphate (RDP), the bis (diphenyl) phosphate of hydroquinone, and the bis(diphenyl) phosphate of bisphenol A, respectively, their oligomeric and polymeric counterparts, and the like.

Specific aromatic organophosphorus compounds have two or more phosphorus-containing groups, and are inclusive of acid esters of formula (8) 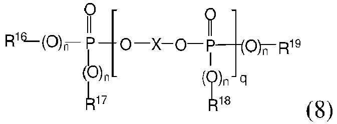 wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, or by C₁₋₄ alkyl and X is a mono- or poly-nuclear aromatic C₆₋₃₀ moiety or a linear or branched C₂₋₃₀ aliphatic radical, which can be OH-substituted and can contain up to 8 ether bonds, provided that at least one of R¹⁶, R¹⁷, R¹⁸, R¹⁹, and X is an aromatic group. In some embodiments R¹⁶, R¹⁷, R¹⁸, and R¹⁹ are each independently C₁₋₄ alkyl, naphthyl, phenyl(C₁₋₄)alkylene, or aryl groups optionally substituted by C₁₋₄ alkyl. Specific aryl moieties are cresyl, phenyl, xylenyl, propylphenyl, or butylphenyl. In some embodiments X in formula (8) is a mono- or poly-nuclear aromatic C₆₋₃₀ moiety derived from a diphenol. Further in formula (8), n is each independently 0 or 1; in some embodiments n is equal to 1. Also in formula (8), q is from 0.5 to 30, from 0.8 to 15, from 1 to 5, or from 1 to 2. Alternatively, X can be represented by the following divalent groups (9), or a combination comprising one or more of these divalent groups.

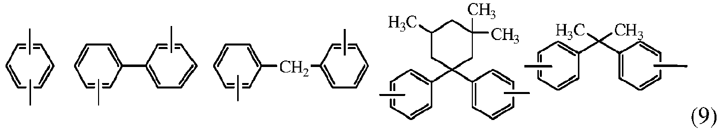

In these embodiments, each of R¹⁶, R¹⁷, R¹⁸, and R¹⁹ can be aromatic, i.e., phenyl, n is 1, and p is 1-5, specifically 1-2. In some embodiments at least one of R¹⁶, R¹⁷, R¹⁸, R¹⁹, and X corresponds to a monomer used to form the polycarbonate, e.g., bisphenol A or resorcinol. In another embodiment, X is derived especially from resorcinol, hydroquinone, bisphenol A, or diphenylphenol, and R¹⁶, R¹⁷, R¹⁸, R¹⁹, is aromatic, specifically phenyl. A specific aromatic organophosphorus compound of this type is resorcinol bis(diphenyl phosphate), also known as RDP. Another specific class of aromatic organophosphorus compounds having two or more phosphorus-containing groups are compounds of formula (10) 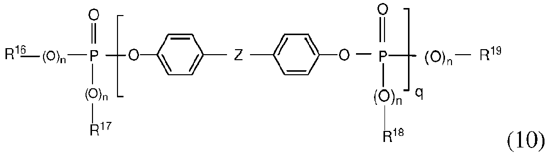 wherein R¹⁶, R¹⁷, R¹⁸, R¹⁹, n, and q are as defined for formula (8) and wherein Z is C₁₋₇ alkylidene, C₁₋₇ alkylene, C₅₋₁₂ cycloalkylidene, -O-, -S-, -SO₂-, or -CO-, specifically isopropylidene. A specific aromatic organophosphorus compound of this type is bisphenol A bis(diphenyl phosphate), also known as BPADP, wherein R¹⁶, R¹⁷, R¹⁸, and R¹⁹ are each phenyl, each n is 1, and q is from 1 to 5, from 1 to 2, or 1.

Organophosphorus compounds containing at least one phosphorus-nitrogen bond includes phosphazenes, phosphorus ester amides, phosphoric acid amides, phosphonic acid amides, phosphinic acid amides, and tris(aziridinyl) phosphine oxide. Phosphazenes (11) and cyclic phosphazenes (12) 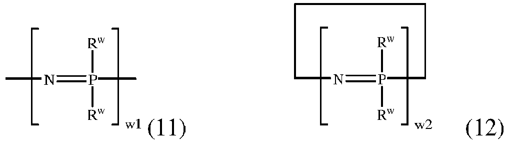 in particular can used, wherein w1 is 3 to 10,000 and w2 is 3 to 25, specifically 3 to 7, and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. Any given R^{w} can further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. A combination of different phosphazenes can be used. A number of phosphazenes and their synthesis are described in H. R. Allcook, "Phosphorus-Nitrogen Compounds" Academic Press (1972), and J. E. Mark et al., "Inorganic Polymers" Prentice-Hall International, Inc. (1992).

Depending on the particular organophosphorus compound used, the copolycarbonate compositions can comprise 0.5 to 15 wt.% or 3.5 to 12 wt.% of the organophosphorus flame retardant, each based on the total weight of the composition. Specifically, the organophosphorus compounds can be bisphenol A bis(diphenyl phosphate), triphenyl phosphate, resorcinol bis(diphenyl phosphate), tricresyl phosphate, or a combination thereof.

The copolycarbonate compositions can further comprise a cyclic siloxane or a linear siloxane to impart fire/flame-retardant properties. The cyclic siloxane can include those with the general formula below 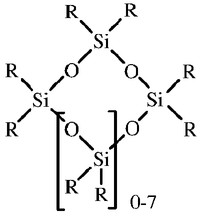 wherein R is each independently C₁₋₃₆ alkyl, fluorinated or perfluorinated C₁₋₃₆ alkyl, C₁₋₃₆ alkoxy, C₆₋₁₄ aryl, aryloxy of 6 to 14 carbon atoms, arylalkoxy of 7 to 36 carbon atoms, or C₁₋₃₆ alkyl-substituted aryl of 6 to 14 carbon atoms. In an embodiment, at least one R may be a phenyl. Examples of cyclic siloxanes include, but not limited to, a cyclic phenyl containing siloxane, octaphenylcyclotetrasiloxane, hexamethylcyclotrisiloxane, octamethylcyclotetrasiloxane, decamethylcyclopentasiloxane, dodecamethylcyclohexasiloxane, trimethyltriphenylcyclotrisiloxane, and tetramethyltetraphenylcyclotetrasiloxane. Octaphenylcyclotetrasiloxane is specifically mentioned.

Linear siloxanes can also be used. The linear siloxanes can be a linear phenyl containing siloxane such as a poly(phenylmethylsiloxane). In an embodiment, the copolycarbonate compositions contain 0.01 to 1% of a cyclic siloxane, a linear siloxane, or a combination thereof.

The copolycarbonate compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

The copolycarbonate compositions can have a glass transition temperature of 155°C or higher, or 155 to 280°C, or 165 to 260°C, and or 185 to 230°C, determined by differential scanning calorimetry (DSC) as per ASTM D3418 with a 20°C/min heating rate.

The copolycarbonate compositions can have excellent transparency. In an embodiment, the copolycarbonate compositions have a haze less of less than 15%, or less than 10%, or less than 5%, or less than 1% and a transmission greater than 85%, or greater than 87%, or greater than 89%, or greater than 90%, each measured according to ASTM D1003-00 using the color space CIE1931 (Illuminant C and a 2° observer) at a 2.5 mm thickness. The copolycarbonate compositions are molded under standard molding conditions. For example, the copolycarbonate compositions are molded at a temperature of 100°C to 175°C above the glass transition temperature of the copolycarbonate composition for a residence time of 2 to 20 minutes.

The copolycarbonate compositions can have excellent transparency in the infrared wavelength range. In an embodiment, the compositions have a transmission at wavelength of 1,000 nm of greater than 87.0%, preferably greater than 88.0%, or greater than 89.0%, as measured with Perkin Elmer 950 spectrometer equipped with 15 cm integrated sphere on 2.5 mm. In another embodiment, the compositions have a transmission at wavelength of 1,250 nm of greater than 87.0%, preferably greater than 88.0%, or greater than 89.0%, as measured with Perkin Elmer 950 spectrometer equipped with 15 cm integrated sphere on 2.5 mm. In still another embodiment, the compositions have a transmission at wavelength of 1,560 nm of greater than 85.0%, preferably greater than 86.0%, or greater than 87.0%, as measured with Perkin Elmer 950 spectrometer equipped with 15 cm integrated sphere on 2.5 mm.

The copolycarbonate compositions can have excellent color. In an embodiment, the copolycarbonate compositions can have a yellowness index of less than 20, or less than 10, or less than 5, or less than 3, as measured by ASTM D1925 on a 2.5 mm plaque. The copolycarbonate compositions are molded under standard molding conditions. For example, the copolycarbonate compositions are molded at a temperature of 100°C to 175°C above the glass transition temperature of the copolycarbonate composition for a residence time of 2 to 20 minutes.

The copolycarbonates can be used in copolycarbonate compositions for the manufacture of a wide variety of articles. Shaped, formed, or molded articles comprising the copolycarbonate compositions are also provided. The compositions can be molded into useful shaped articles by a variety of methods, such as injection molding, extrusion, rotational molding, blow molding, and thermoforming. The article can be a molded article, a thermoformed article, an extruded film, an extruded sheet, one or more layers of a multi-layer article, a substrate for a coated article, or a substrate for a metallized article made from the copolycarbonate composition.

In an embodiment, the article has a wall thickness of less than 4.0 millimeters (mm), less than 2.0 mm, less than 1.5 mm, less than 0.8 mm, or less than 0.4 mm. For example, the article can have a wall thickness of 0.1 to 4.0 mm, or 0.2 to 2.0 mm, or 0.2 to 0.8 mm.

Some examples of the articles include a lens, a lens or cover for lighting devices, a lens holder, motor vehicle headlights, automotive rear lights, automotive fog lights, flash lights, cameras, mobile phone cameras; a light guide, a substrate film, a signal indicator, a waveguide element, a reflector, a collimator, a container, a housing for a light source, a lamp bezel, a lamp holder, a lamp cover, a display screen, glazing, a safety goggle, a visor, a medical device, a face shield, an optical fiber, a fuse, a part of a domestic appliance, a window or door of a domestic appliance, a computer housing, a business machine housing, a housings for a monitor, an electronic housing such as housings for cell phones, an electrical connector, a fire shield, a food tray, a packaging film, an animal cage, a tray, an optical film, a light bulb or a film laminate.

### EXAMPLES

The materials used in the Examples are described in Table 1.

**Table 1.**

| Designation | Material | Source |
|---|---|---|
| L-PC | Linear bisphenol A homopolycarbonate available under the trade name LEXAN | SABIC |
| B-PC1 | Branched, cyanophenol end-capped bisphenol A homopolycarbonate (available under the trade name LEXAN CFR9131) | SABIC |
| B-PC2 | Branched, cyanophenol end-capped bisphenol A homopolycarbonate (available under the trade name LEXAN CFR9111) | SABIC |
| B-PC3 | Branched, cyanophenol end-capped bisphenol A homopolycarbonate (available under the trade name LEXAN CFR9712) | SABIC |
| B-PC4 | Branched, cyanophenol end-capped bisphenol A homopolycarbonate (available under the trade name LEXAN CFR7630) | SABIC |
| B-PC5 | Branched, cyanophenol end-capped bisphenol A homopolycarbonate (available under the trade name LEXAN CFR7431) | SABIC |
| PPC | Poly(phosphonate-co-carbonate) available under the designation FRX® CO3000 | FRX Polymers |
| PBHP-PC | Poly(2-phenyl-3,3'-bis(4-hydroxyphenyl) phthalimidine-co-bisphenol A)carbonate, available under the trade name LEXAN XHT | SABIC |
| MTBA | Methyltributylammonium chloride | SABIC |
| DOPO | 9,10-dihydro-9-oxa-10-phosphaphenanthrene-10-oxide | SABIC |
| DOPO-Me | 1,1-bis(4-hydroxyphenyl)-1-(6-oxido-6H-dibenz <c,e> <1,2> oxaphosphorin-6-yl)ethane | SABIC |

Physical measurements were made using the tests and test methods described below. Unless indicated otherwise, all tests are the tests in effect in the year 2010.

Liquid chromatography analysis (UPLC) of all the samples was performed using a Waters Acquity system (from Ultra Performance LLC) with a binary solvent manager, injector, and photo diode array (PDA) detector. The chromatography column used was from Phenomenex, a Kinetex 1.7 micrometer (µm) XB C-18 100A (50 x 2.10 mm); Part number: 00B-4498-AN. The system used was a gradient as is shown in Table 2. λ= 264 nm.

**Table 2.**

| Time (min.) | Flow Rate | %A (Water) | %B (Acetonitrile) |
|---|---|---|---|
| Initial | 0.8 | 65.0 | 35.0 |
| 0.45 | 0.8 | 51.0 | 49.0 |
| 0.50 | 0.8 | 50.0 | 50.0 |
| 1.20 | 0.8 | 10.0 | 90.0 |
| 1.40 | 0.8 | 0.0 | 100.0 |
| 1.75 | 0.8 | 0.0 | 100.0 |
| 1.80 | 0.8 | 65.0 | 35.0 |
| 2.50 | 0.8 | 65.0 | 35.0 |
| 7.50 | 0.8 | 65.0 | 35.0 |
| 10.01 | 0.05 | 50.0 | 50.0 |

Terminal -OH group concentration was determined by proton nuclear magnetic resonance spectroscopy (¹H NMR).

Molecular weight was determined by gel permeation chromatography on a _Waters Model# 2695, with a/ Waters UV detector, Model# 5487 at 564 nm and using bisphenol A homopolycarbonate standards.

Tg was determined using differential scanning calorimetry with a temperature gradient of 20°C/min.

Flammability tests were performed following the procedure of Underwriter's Laboratory Bulletin 94 entitled "Tests for Flammability of Plastic Materials, UL94", which is incorporated herein by reference. According to this procedure, the materials were classified as either UL94 V-0, UL94 V-1, or UL94 V-2 on the basis of the test results obtained for five samples. The procedure and criteria for each of these flammability classifications according to UL94, are, briefly, as follows:

Procedure: A total of 10 specimens (2 sets of 5) are tested per thickness. Five of each thickness are tested after conditioning for 48 hours at 23°C, 50% relative humidity. The other five of each thickness are tested after conditioning for seven days at 70°C. The bar is mounted with the long axis vertical for flammability testing. The specimen is supported such that its lower end is 9.5 mm above the Bunsen burner tube. A blue 19 mm high flame is applied to the center of the lower edge of specimen for 10 seconds. The time till the flaming of the bar ceases is recorded. If burning ceases, the flame is re-applied for an additional 10 seconds. Again the time till the flaming of the bar ceases is recorded. If the specimen drips particles, these shall be allowed to fall onto a layer of untreated surgical cotton placed 305 mm below the specimen.

Criteria for flammability classification of V0 according to UL94 are: individual flame time ≤ 10 seconds (s), total flame time of 5 specimens ≤ 50 s, glowing time of individual specimen ≤ 30 s, and no particles ignite cotton.

Ultraviolet-visible (UV-vis) spectroscopy was performed using an Agilent 8453 from Agilent Technologies to obtain absorbance spectra. Samples were analyzed using a quartz cell with a path length of 10 cm over a wavelength range from 200 to 700 nm.

APHA is a single number Yellowness Index used for measuring yellow coloration in nearly white liquid samples. APHA index values can determined in accordance with ASTM D1209, or compared with commercially obtained standards. Samples of solutions as reported below were analyzed with a Gretag Macbeth Color Eye 7000A instrument. The instrument readings thus obtained are reported as solution APHA values (10% w/w in DMSO).

### Example 1.

The synthesis of the DOPO-Me bisphenol monomer is shown in Scheme 1.

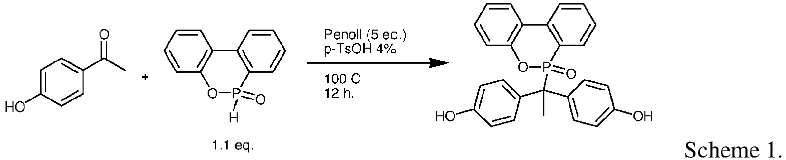

In a typical procedure for the synthesis of DOPO-Me, 80 grams (g) (407.9 millimoles (mmol)) of 4-hydroxy acetophenone were mixed with DOPO (92.6 g, 216.18 mmol, 1.05 eq.) in phenol (192 g, 5 eq.). Next, p-toluenesulfonic acid (p-TsOH) was added (2.9 g, 4% mol). The mixture was warmed to over 80°C (see Table 2) and stirred overnight (12 to 20 hours). After the reaction was complete, the yellow suspension becomes white or pale yellow (see Table 3). The product appeared suspension was observed. Upon filtration and washing with ethanol (EtOH) or ethyl acetate (EtOAc), the product appears as a single peak when analyzed by UPLC as described above with the gradient shown in Table 1. The product had a melting point (m. p.) of 309°C. Elemental analysis: %C 72.7, %H 5.6; Calculated: %C 72.89, %H 4.94.

DOPO-Me bisphenol monomer was synthesized in two batches (Batch A and Batch B). The conditions, APHA values, and purity of each batch was slightly different, as shown in Table 3.

**Table 3.**

| Batch | Stirring/scale | Temperature (°C) | Reaction Time (h) | Color | APHA | Purity |
|---|---|---|---|---|---|---|
| A | Stir bar / 100 g | 115-120 | 21 | Pale Yellow | >50 | 98.6 |
| B | Mechanical / 1.2 Kg | 95-99 | 12 | White | <20 | >99.7 |

As provided in Table 3, when the monomer was synthesized using the process conditions for Batch A, the product was slightly yellow and had an APHA of greater than 50 in a DMSO solution (10% w/w). Most probably, this was due to the formation of colored pinacol products. When the monomer was prepared using the process conditions for Batch B, the product quality was greatly improved, with a white product obtained having an APHA of less than 20 in a DMSO solution (10% w/w).

The DOPO-Me bisphenol monomer can be purified further as follows. First, the DOPO-Me is dissolved in a 5 wt% NaOH(_{aq})/ MeOH (1:1) solution, filtered through an active carbon plug (0.5-1 inches thickness), and washed with two volumes of fresh 5 wt% NaOH_{(aq)}/ MeOH (1:1) solution. The filtrate is then acidified with HCl 1 molar (M) until pH < 2, and stirred for 5 minutes to provide a precipitate. The precipitate is then filtered and washed with deionized water to provide a powder. The powder is dried at 75°C for 3 to 4 hours.

### Example 2.

The incorporation of DOPO-Me bisphenol monomer into polycarbonate was performed via an interfacial process using a bench-top system having pH control capability, regulated by a stream of 30 wt% NaOH solution pumped into the solution and controlled by a pH probe.

Three different processes were used as described below.

### Process 1: Bis-chloroformate Route

The procedure for the bischloroformate process is as follows. This process was conducted using 15 wt% solids in the reaction and a targeted amount of 1.5% w/w (1.5 wt% elemental phosphorus based on the total weight of the polycarbonate), where the phosphorous is provided in the form of the DOPO-Me obtained in Batch A, Table 3.

First, 40.7 g (178.3 mmol) of bisphenol A and 1.73 g of p-cumylphenol (8.2 mmol) were suspended in 600 mL of water and 300 mL of dichloromethane. Phosgene was bubbled at 2 g/min for 15 minutes into the solution and the pH was regulated to 5.5. After purging, 11.1 g of DOPO-Me (25.9 mmol) was added and the resulting mixture was stirred for 20 minutes at a pH of 10.0. After that, 500 microliters (µL) of triethylamine (TEA) was added and the mixture was stirred at a pH of 10.0 for 15 minutes. Phosgene is then bubbled into the mixture at a rate of 2 g/min for 5 minutes with the pH regulated at 10.0. After the reaction, the aqueous and organic phases were separated and the organic layer was washed with 500 mL of 0.1 M HCl in water. After that, the dichloromethane phase was washed 5 times with deionized water (500 mL) and the polymer was precipitated by pouring the organic phase into hot water.

The DOPO-Me incorporation was 4% mol/mol (4 mole% based on total units in copolycarbonate (13% mol/mol expected)) as determined by ¹H NMR spectroscopy. The resulting copolymer had a Tg of 150°C, a Mw= 20,988 g/mol, and a PDI of 2.33.

Table 4 shows the results of the incorporation of DOPO-Me using the bis-chloroformate process.

**Table 4.**

| RUN | Monomer | % mol* | Inc. %** | Solids (wt%) | Mw (g/mole) | PDI | Emulsion formed ? | % w/w P | % MTBA*** | Tg (°C) |
|---|---|---|---|---|---|---|---|---|---|---|
| 1 | DOPO-Me | 13 | ∼4 | 15 | 20,988 | 2.3 | A little | 1.5 | 0 | 150.0 |
| 2 | DOPO-Me | 26 | ∼18 | 15 | 18,828 | 2.1 | A little | 3.0 | 0 | 160.3 |

| | | | | | | | | | | |
|---|---|---|---|---|---|---|---|---|---|---|
| * Mole percent of DOPO-Me monomer expected to be incorporated in the copolymer **Mole percent DOPO-Me actual incorporation *** Amount of methyltributylammonium chloride | | | | | | | | | | |

The above results show that a bischloroformate strategy is not optimal for incorporation of DOPO-Me into copolycarbonates with bisphenol A.

### Process 2: Front addition of DOPO-Me.

The procedure for this process is as follows. This process uses 15 wt% solids; 1.5% P w/w in the form of DOPO-Me from Batch A, Table 3. To initiate the reaction, 40 g of bisphenol A (175.6 mmol), 12.4 g of DOPO-Me (28.9 mmol), 1.73 g of p-cumylphenol (6.2 mmol), and 490 µL of TEA were mixed in 600 mL of water and 300 mL of dichloromethane. Phosgene was bubbled at 1 g/min for 29 minutes into the solution and the pH was regulated to 10.0. After the reaction, the phases were separated and the organic layer was washed with 500 mL of 0.1 M HCl. After that, the dichloromethane phase was washed 5 times with deionized water (500 mL) and the polymer was precipitated by pouring the organic phase on hot water.

DOPO-Me incorporation as determined by ¹H NMR was 12% mol/mol. The concentration of -OH end-groups was 2,316 ppm. The resulting product had a Tg= 153°C, Mw= 24,008 g/mol, and PDI of 2.25.

Based on this procedure, a number of parameters were evaluated for their effect on copolymerization: % solids (9 wt% or 15 wt%); % w/w of P (1.5% or 3.0%); and mole % of MTBA (0 or 0.5%, based on the total moles of monomers and endcaps). The results are shown in Tables 5 and 6.

**Table 5.**

| | 0.5 mol% MTBA | | 0 mol% MTBA | |
|---|---|---|---|---|
| Run No. | 3 | 4 | 5 | 6 |
| % P (w/w) (Target) | 1.5% P | 3.0% P | 1.5% P | 3.0% P |
| % solids (wt%) | 9% | 9% | 9% | 9% |
| % monomer (mol/mol)* (Target) | 14.2% | 32% | 14.2% | 32% |
| % monomer (mol/mol)** (Actual) | 15.2% | 30.6% | 14.8% | 32.2% |
| TEA (wt%) | 2% | 2% | 2% | 2% |
| Mw (g/mol) | 19,463 | 20,021 | 17,273 | 11,801 |
| PDI | 2.79 | 4.26 | 5.12 | 1.91 |
| Tg (°C) | 163.5 | 180.3 | 153.1 | 177.6 |
| -OH end group concentration (ppm) | 372 | 800 | 34.7 | 1,032 |
| Comments | No emulsification on work up^{‡} | No emulsification on work up^{‡}; Slightly bimodal | Bimodal | No emulsification on work up^{‡}; No Mw build-up |

| | | | | |
|---|---|---|---|---|
| *Mole percent of DOPO-Me monomer expected to be incorporated in the copolymer **Mole percent DOPO-Me actual incorporation (± 2-3%) ^{‡}Copolymers containing phosphorous monomers may emulsify during the interfacial polymerization or during the water washing steps in the purification process. No emulsification was observed unless noted otherwise. | | | | |

The results in Table 5 show that in this process, at 9 wt% solids, MTBA was necessary to increase the molecular weight of the resulting copolycarbonate. When not using MTBA, the GPC peaks appear bimodal. Without being bound by theory, it is believed that when the reactor is starved of bisphenol A, DOPO-Me starts to polymerize with itself, forming an extra polymer population that appears as an extra peak in the GPC.

Table 6 shows the results of screening at high amount of solids and varying the same parameters (%w/w P and mol% MTBA).

**Table 6.**

| | 0.5 mol% MTBA | | 0 mol% MTBA | |
|---|---|---|---|---|
| Run No. | 7 | 8 | 9 | 10 |
| % P (w/w) (Target) | 1.5% P | 3.0% P | 1.5% P | 3.0% P |
| %solids (wt%) | 15% | 15% | 15% | 15% |
| % monomer (mol/mol)* (Target) | 14.2% | 32% | 14.2% | 32.0% |
| % monomer (mol/mol)** (Actual) | 12.6% | 27.5% | 12.0% | n/a |
| TEA (wt%) | 2% | 2% | 2% | 2% |
| Mw (g/mol) | 24,538 | 21,222 | 24,008 | 19,761 |
| PDI | 2.57 | 2.45 | 2.25 | 6.17 |
| Tg (°C) | 156.42 | 179.6 | 153.16 | n/a |
| -OH end group concentration (ppm) | 2,488 | 8,000 | 2,316 | n/a |
| Comments | No emulsification on work up^{‡} | No emulsification on work up^{‡} | No emulsification on work up^{‡} | Bimodal |

| | | | | |
|---|---|---|---|---|
| *Mole percent of DOPO-Me monomer expected to be incorporated in the copolymer **Mole percent DOPO-Me actual incorporation (± 2-3%) ^{‡}Copolymers containing phosphorous monomers may emulsify during the interfacial polymerization or during the water washing steps in the purification process. No emulsification was observed. | | | | |

It can be seen from the data in Table 6 that a higher amount of solids and the presence of MTBA lead to the production of copolycarbonates with greater molecular weights. Without MTBA, at a high concentration of DOPO-Me, a bimodal result is observed.

### Process 3: Pre-dissolution of DOPO-Me

The greater purity of DOPO-Me from "Batch B" made forming copolycarbonates more challenging than when using DOPO-Me from "Batch A." As a solution, the DOPO-Me monomer was pre-dissolved in caustic and added into the reactor during phosgenation.

This process (Run No. 11) was conducted using 3.0% w/w of P from "Batch B" DOPO-Me, Table 3. First, 24.7 g of DOPO-Me (57.6 mmol) and 1.34 g of p-cumylphenol (6.3 mmol) were dissolved in 200 mL of water with 2 eq. of NaOH. Upon complete dissolution, this caustic solution was loaded into an addition funnel connected to the polymerization reactor. Inside the reactor, 28 g of bisphenol A (122.7 mmol) and 340 µL of TEA and 300 µL of MTBA solution were added to 300 mL of dichloromethane and 400 mL of water (15% solids). At this point, phosgene was bubbled into the reactor at 1 g/min and the pH regulated to 10.0. The contents of the funnel (DOPO-Me and PCP) were added over 10 minutes. The total phosgenation time was 26 minutes. After the reaction, the phases were separated and the organic layer was washed with 500 mL of 0.1 M HCl. After that, the dichloromethane phase was washed 5 times with deionized water (500 mL) and the polymer was precipitated by pouring the organic phase on hot water.

DOPO-Me incorporation was 30.0% mol/mol (32.0% mol/mol expected) as determined by ¹H NMR; BPA-OH end group content was 68.3 ppm; and DOPO-Me-OH end group content was 38.5 ppm. The resulting product had a Tg= 184.5°C, Mw= 25,661 g/mol, and PDI of 2.83.

### Example 3.

The physical properties of copolycarbonates manufactured by the above methods were tested for color, hydrostability, and flame retardance as follows.

Color. Samples were dissolved in pure dichloromethane at a 5% w/w concentration and left to mix for 12 hours. The samples were analyzed using a quartz cell with a path length of 10 cm over a wavelength range from 200 to 700 nm.

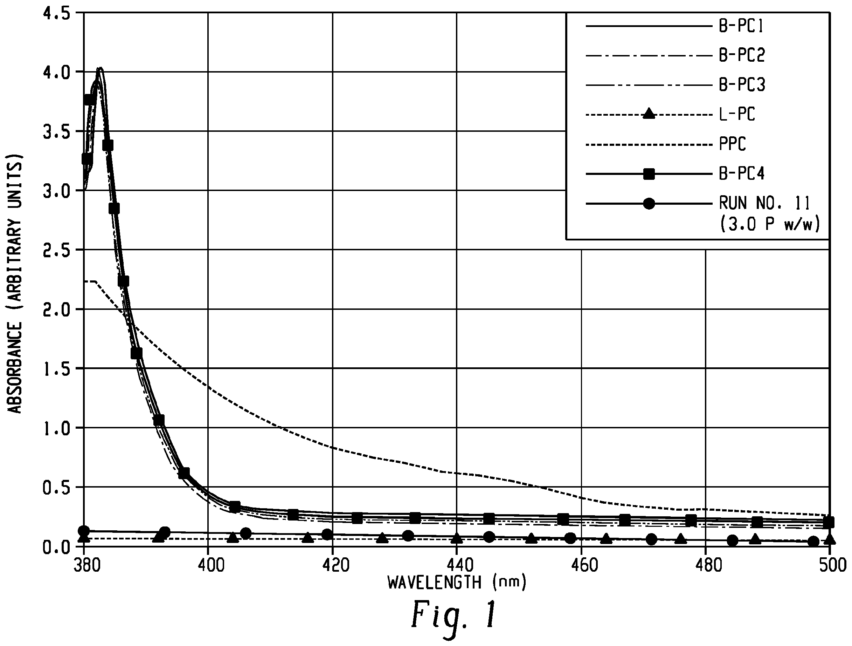

A comparison of the absorbance of the copolycarbonate containing DOPO-Me monomer (Run No. 11, 3.0% w/w P) was made with a linear bisphenol A homopolycarbonate (L-PC), five branched bisphenol A polycarbonates (B-PC1 to B-PC5), and a flame retardant copolycarbonate containing phosphonate units (PPC) that can pass UL94 V0 at 0.4 mm. The results are shown in FIG. 1.

As can be seen in FIG. 1, the relatively lower absorbance near the 400 nm region is observed for the copolycarbonate containing the DOPO-Me monomer compared to the branched and flame retardant comparative polycarbonates. The region around 400 nm is where the yellow color appears, and thus the copolycarbonate containing the DOPO-Me monomer had superior color.

Hydrostability. The hydrostability of two copolycarbonates containing the DOPO-Me monomer were tested using the following procedure. In a glass 2-ounce bottle, 1.0 g of polymer sample was dissolved in 20 g of 1, 2-dichloroethane. After complete dissolution, 2.5 g of 2-butanone and 25 µL of distilled water were added. The bottle was sealed with electrical tape and stored in an oven at 75°C for 2 weeks. Samples were taken every 24-48 hours. The copolycarbonate samples were recorded as Run No. 12 (1.5% w/w P, prepared similarly to Run Nos. 3, 5, 7, and 9) and Run No. 13 (3.0% w/w P, prepared similarly to Run Nos. 4, 6, 8, and 10).

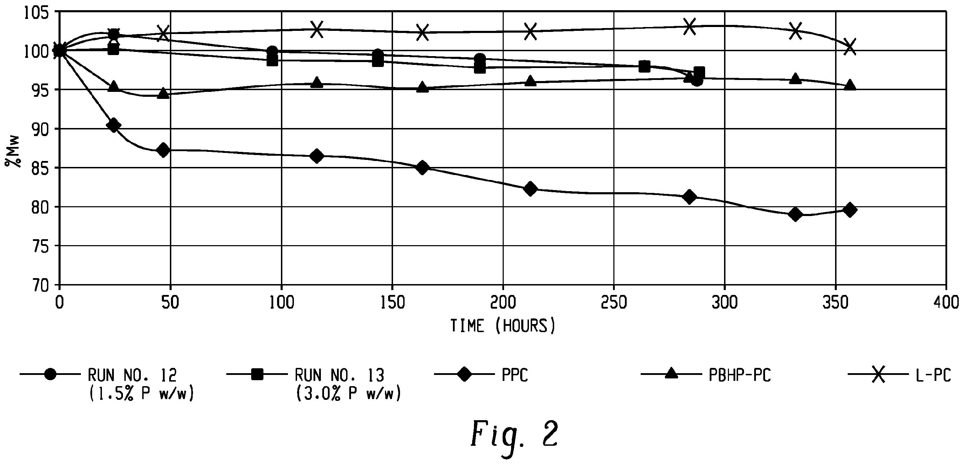

For analysis, 13-15 drops of the polymer solution were dissolved in 15 mL of dichloromethane/toluene and analyzed by GPC. The two copolycarbonates containing DOPO-Me monomers (Run No. 12 and 13) were tested versus comparative samples of PPC, L-PC, and PBHP-PC. The % molecular weight loss over two weeks during the test is shown in FIG. 2. The data in FIG. 2 shows that the DOPO-Me containing copolycarbonates are as stable as the unbranched bisphenol A homopolycarbonate and more stable than the two copolycarbonates PPC and PBHP-PC.

Flammability. Bars for the UL94 test were made as follows: 4 to 6 g of polymer powder or pellets were extended over a metal plate covered with PTFE-coated aluminum foil. Two shims of known thickness (1.0 or 0.4 mm) were placed on the corners and a second plate was put on top of that. The twin plates were pressed at 550-600°F (287.8-315.6°C) for 2-3 minutes at a pressure of 15-20 psi (103-137.0 kPA). Flame bars (5 inches x 0.5 inches) (127 mm x 12.7 mm) were prepared by cutting the obtained films and tested using the UL94 V0 protocol.

The flame out times (seconds (s)) at each thickness are shown in Table 7.

**Table 7.**

| | | |
|---|---|---|
| Polymer | 1.0 mm | 0.4 mm |
| L-PC | 5-7 s | 5-7 s |
| PPC | 2-3 s | 2-3 s |
| B-PC4 | 5-7 s | 5-7 s |
| Run No. 11 (3.0% P w/w) | 2-3 s | 2-3 s |
| Run No. 7 (1.5% P w/w) | 2-3 s | 2-3 s |

The data in Table 7 shows that the DOPO-Me containing copolycarbonates have similar flame performance compared to PPC (UL94 V0 at 0.4 mm) and better flame performance than B-PC4 (UL94 V0 at 1.0 mm). In addition, it was observed that the DOPO-Me containing copolycarbonates had better color than PPC, as evidenced by the DOPO-Me containing copolycarbonates being white powders, and forming transparent films after hot pressing.

The compositions, methods, and articles can alternatively comprise, consist of, or consist essentially of, any appropriate components or steps herein disclosed. The compositions, methods, and articles can additionally, or alternatively, be formulated so as to be devoid, or substantially free, of any steps, components, materials, ingredients, adjuvants, or species that are otherwise not necessary to the achievement of the function or objectives of the compositions, methods, and articles.

The singular forms "a," "an," and "the" include plural referents unless the context clearly dictates otherwise. "Or" means "and/or." Unless defined otherwise, technical and scientific terms used herein have the same meaning as is commonly understood by one of skill in the art to which this invention belongs. As used herein, a "combination" is inclusive of blends, mixtures, alloys, reaction products, and the like. A "combination thereof" includes any combination comprising at least one of the listed components or properties optionally together with a like component or property not listed.

The endpoints of all ranges directed to the same component or property are inclusive and independently combinable (e.g., ranges of "less than or equal to 25 wt%, or 5 wt% to 20 wt%," is inclusive of the endpoints of the ranges of "5 wt% to 25 wt%," etc.). Disclosure of a narrower range or more specific group in addition to a broader range is not a disclaimer of the broader range or larger group.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" and "hydrocarbon" is a substituent comprising carbon and hydrogen, optionally with 1 to 3 heteroatoms, for example, oxygen, nitrogen, halogen, silicon, sulfur, or a combination thereof; "alkyl" is a straight or branched chain, saturated monovalent hydrocarbon group; "alkylene" is a straight or branched chain, saturated, divalent hydrocarbon group; "alkylidene" is a straight or branched chain, saturated divalent hydrocarbon group, with both valences on a single common carbon atom; "alkenyl" is a straight or branched chain monovalent hydrocarbon group having at least two carbons joined by a carbon-carbon double bond; "cycloalkyl" is a non-aromatic monovalent monocyclic or multicylic hydrocarbon group having at least three carbon atoms; "cycloalkylene" is a divalent radical formed by the removal of two hydrogen atoms from two different carbon atoms on one or more rings of a cycloalkyl group; "haloalkyl" is an alkyl group that is substituted with a halogen; "aryl" is an aromatic monovalent group containing only carbon in the aromatic ring or rings; "arylene" is an aromatic divalent group containing only carbon in the aromatic ring or rings; "alkylarylene" is an aryl group that has been substituted with an alkyl group as defined above, with 4-methylphenyl being an exemplary alkylaryl group; "arylalkylene" is an alkyl group that has been substituted with an aryl group as defined above, with benzyl being an exemplary arylalkyl group; "haloaryl" is an aryl group that is substituted with a halogen; "acyl" is an alkyl group as defined above with the indicated number of carbon atoms attached through a carbonyl carbon bridge (-C(=O)-); "alkoxy" is an alkyl group as defined above with the indicated number of carbon atoms attached through an oxygen bridge (-O-); "haloalkoxy" is an alkoxy group that is substituted with a halogen; and "aryloxy" is an aryl group as defined above with the indicated number of carbon atoms attached through an oxygen bridge (-O-).

As used herein, the prefix "hetero" means a group or compound including at least one ring member that is a heteroatom (e.g., 1 to 4 heteroatoms) each independently N, O, S, Si, or P. "Halogen" means one of the elements of group 17 of the periodic table (e.g., fluorine, chlorine, bromine, and iodine).

Unless otherwise indicated, each of the foregoing groups can be unsubstituted or substituted, provided that the substitution does not significantly adversely affect synthesis, stability, or use of the compound. The term "substituted" means that at least one hydrogen on the designated atom or group is replaced with another group, provided that the designated atom's normal valence is not exceeded. When the substituent is oxo (i.e., =O), then two hydrogens on the atom are replaced. Combinations of substituents or variables are permissible provided that the substitutions do not significantly adversely affect synthesis or use of the compound. Groups that can be present on a substituted position include (-NO₂), cyano (-CN), hydroxy (-OH), halogen, thiol (-SH), thiocyano (-SCN), C₂₋₆ alkanoyl (e.g., acyl (H₃CC(=O)-); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxy; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ arylalkyl having 1 to 3 separate or fused rings and from 6 to 18 ring carbon atoms; or arylalkoxy having 1 1 to 3 separate or fused rings and from 6 to 18 ring carbon atoms. The indicated number of carbon atoms for a group is exclusive of any substituents.

## Claims

1. A phosphinate copolycarbonate comprising units of the formula 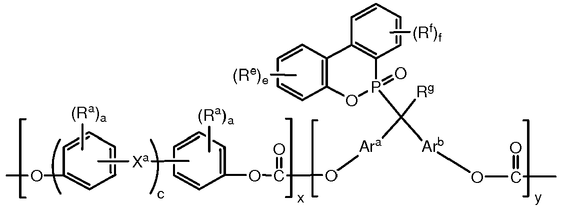 wherein
each R^{a} is independently a halogen atom, C₁₋₁₀ alkyl, C₁₋₁₀ haloalkyl, C₁₋₁₂ alkoxy, C₆₋₁₀ aryl, or C₆₋₁₂ haloaryl;
each X^{a} is independently a single bond, -O-, -S-, -S(O)-, -S(O)₂-, -C(O)-, C₃₋₁₈ cycloalkylidene; a C₁₋₂₅ alkylidene of the formula -C(R^{c})(R^{d})- wherein R^{c} and R^{d} are each independently hydrogen, C₁₋₁₂ alkyl, C₁₋₁₂ cycloalkyl, C₁₋₁₂ arylalkyl, C₁₋₁₂ heteroalkyl, or cyclic C₇₋₁₂ heteroarylalkyl; or a group of the formula -C(=R^{h})-wherein R^{h} is a divalent C₁₋₁₂ hydrocarbon group;
R^{e} and R^{f} are independently a halogen atom, C₁₋₁₀ alkyl, C₁₋₁₀ haloalkyl, C₁₋₁₀ alkoxy, C₁₋₁₀ haloalkoxy, C₂₋₁₀ alkenyl, or C₃₋₁₀ cycloalkyl;
each R^{g} is a substituted or unsubstituted C₆₋₁₈ aryl, C₁₋₁₀ alkyl, C₁₋₁₀ haloalkyl, C₁₋₁₀ alkoxy, C₁₋₁₀ haloalkoxy, C₂₋₁₀ alkenyl, C₃₋₁₀ cycloalkyl, C₆₋₁₀ aryl, or C₆₋₁₂ haloaryl;
Ar^{a} and Ar^{b} are each independently the same or different C₆₋₁₈ aryl;
a, e, and f are each independently 0 to 4, or 0 to 2, or 0;
c is 0 or 1; and
x and y represent the molar ratio of each unit in the phosphinate copolycarbonate, and are 0.5:99.5 to 99.5:0.5, or 1:99 to 99:1, or 10:90 to 90:10, or 20:80 to 80:20.

2. The phosphinate copolycarbonate of claim 1, wherein Ar^{a} and Ar^{b} are each independently of the formulas 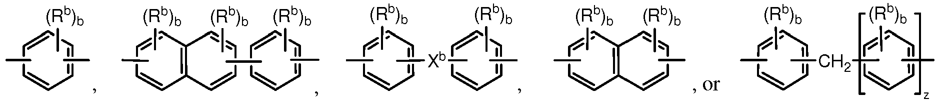 wherein in the foregoing formulas,
each R^{b} is independently a halogen atom, hydroxyl, amino, nitro, thiol, carboxyl, sulphato, -COH, -NHCOCH₃, C₁₋₁₀ alkyl, C₁₋₁₀ haloalkyl, C₃₋₁₀ cycloalkyl, C₁₋₁₂ alkoxy, C₁₋₁₂ haloalkoxy, C₆₋₁₂ aryl, C₆₋₁₂ haloaryl, or glycidyl;
X^{b} is a covalent bond, -CH₂-(CH₂)ₚ-CH₂-, -C(O)-, -S(O₂)-, -O-, or -NH-;
b is 0 to 4, or 0 to 2, or 0; and
p and z are each independently 1 to 20, 1 to 10, or 1 to 6.

3. The phosphinate copolycarbonate of claim 1 or 2, comprising units of the formula 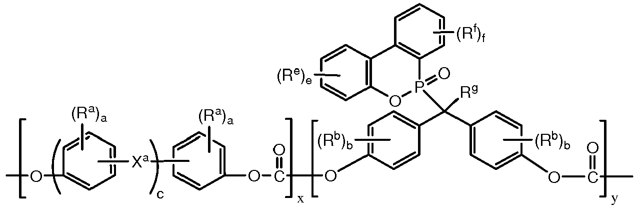 wherein
each R^{b} is independently a halogen atom, hydroxyl, C₁₋₆ alkyl, C₁₋₆ haloalkyl, C₃₋₇ cycloalkyl, C₁₋₆ alkoxy, C₁₋₆ haloalkoxy, C₆₋₁₂ aryl, C₆₋₁₂ haloaryl, or glycidyl;
each R^{g} is a substituted or unsubstituted C₆₋₁₂ aryl or C₁₋₆ alkyl, preferably an unsubstituted C₆ aryl or C₁₋₄ alkyl;
a, b, e, and f are each independently 0 to 2, preferably 0;
c is 1; and
x and y represent the molar ratio of each unit in the phosphinate copolycarbonate and are 50:50 to 90:10, or 50:50 to 80:20.

4. The phosphinate copolycarbonate of any one or more of claims 1 to 3, comprising units of the formula 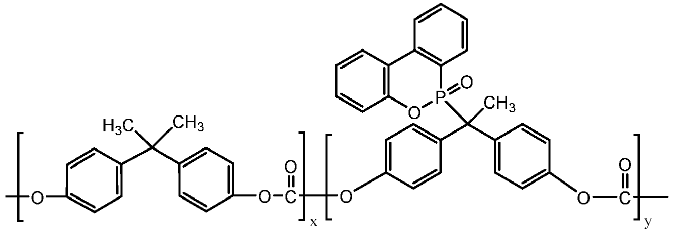 wherein x and y represent the molar ratio of each unit in the phosphinate copolycarbonate and are 60:40 to 90:10, or 60:40 to 80:20.

5. The phosphinate copolycarbonate of any one or more of claims 1 to 4, wherein the phosphinate copolycarbonate has one or more of
a weight average molecular weight of 10,000 to 40,000 grams per mole, or 15,000 to 30,000 grams per mole, determined as indicated in the description;
a UL94 rating of V0 at a thickness of 0.8 millimeters, or at a thickness of 0.4 millimeters, as measured by the UL94 flammability test; and
an absorbance at 400 nanometers of less than 0.5, or less than 0.25, or less than 0.1 at a concentration of 500 milligrams per milliliter in dichloromethane and a path length of 10 cm, as measured by ultraviolet-visible absorbance spectroscopy.

6. A process for the manufacture of the phosphinate copolycarbonate of any one or more of claims 1 to 5, the process comprising
copolymerizing an aromatic dihydroxy compound and a phosphinate bisphenol of the formulas 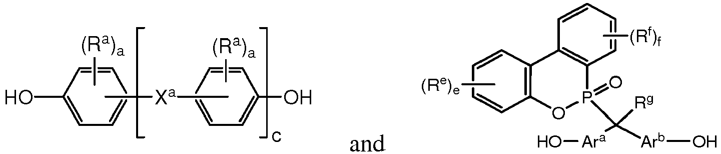 in the presence of a carbonate precursor, under conditions effective provide the phosphinate copolycarbonate.

7. The process of claim 6, the process comprising
copolymerizing the aromatic dihydroxy compound and a phosphinate bisphenol of the formula 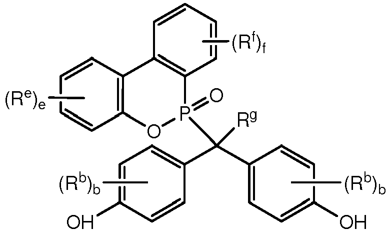 in the presence of a carbonate precursor, under conditions effective provide to provide the phosphinate bisphenol, wherein
each R^{b} is independently a halogen atom, hydroxyl, C₁₋₆ alkyl, C₁₋₆ haloalkyl, C₃₋₇ cycloalkyl, C₁₋₆ alkoxy, C₁₋₆ haloalkoxy, C₆₋₁₂ aryl, C₆₋₁₂ haloaryl, or glycidyl;
each R^{g} is a substituted or unsubstituted C₆₋₁₂ aryl or C₁₋₆ alkyl, preferably an unsubstituted C₆ aryl or C₁₋₄ alkyl;
a, b, e, and f are each independently 0 to 2, preferably 0; and
c is 0 or 1, preferably 1.

8. The process of claim 7, the process comprising
copolymerizing bisphenol A and a phosphinate bisphenol of the formula 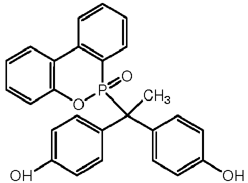 in the presence of a carbonate precursor, under conditions effective provide the phosphinate bisphenol.

9. The process of any one or more of claims 6 to 8, wherein the copolymerizing is an interfacial process conducted in the presence of a catalyst or a melt process conducted in the presence of a catalyst;
preferably wherein the copolymerizing is an interfacial process conducted in the presence of a catalyst, wherein a caustic solution of the phosphinate bisphenol is added to the aromatic dihydroxy compound after a portion of the carbonate precursor is contacted with the aromatic dihydroxy compound.

10. The process of any one or more of claims 6 to 9, further comprising manufacturing the phosphinate bisphenol by a process comprising:
reacting a hydrogen phosphinate of the formula 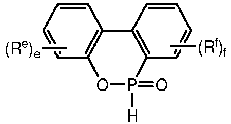 with a 4-hydroxy phenone and a phenol of the formulas 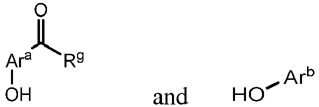 under conditions effective to provide the phosphinate bisphenol of the formula

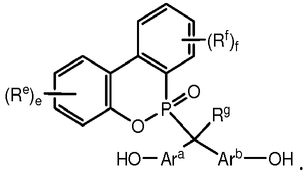

11. The process of claim 10, comprising manufacturing the phosphinate bisphenol by a process comprising:
reacting a hydrogen phosphinate of the formula 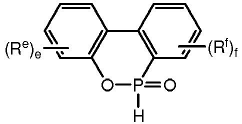 with a 4-hydroxy phenone and a phenol of the formulas 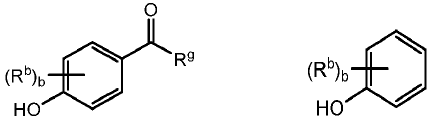 under conditions effective to provide the phosphinate bisphenol of the formula

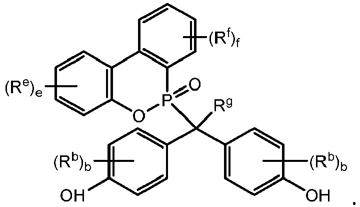

12. The process of claim 11, comprising
reacting a hydrogen phosphinate of the formula 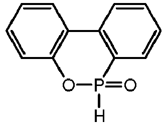 with a 4-hydroxy acetophenone and a phenol of the formulas 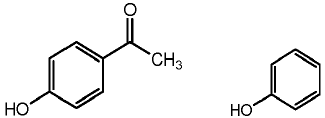 under conditions effective to provide the phosphinate bisphenol of the formula

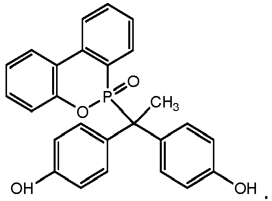

13. A copolycarbonate composition, comprising
the phosphinate copolycarbonate of any one of claims 1 to 5;
optionally another polymer that this not the same as the copolycarbonate; and optionally an additive composition.

14. An article comprising the copolycarbonate composition of claim 13;
optionally having a wall thickness of less than 4.0 millimeters, less than 2.0 millimeters, less than 1.5 millimeters, less than 0.8 millimeters, or less than 0.4 millimeters;
preferably wherein the article is manufactured by a method comprising molding, extruding, and/or shaping the copolycarbonate composition to form the article.

15. The article of claim 14, wherein the article is a lens, a cover for a lighting device, lens for a lighting device, lens holder, automotive light, flashlight, light bulb, camera, mobile phone camera, display screen, safety goggles, visor, medical device, face shield, animal cage, light guide, signal indicator, waveguide element, optical fiber, reflector, collimator, container, housing for a light source, lamp bezel, lamp holder, lamp cover, glazing, part of a domestic appliance, computer housing, business machine housing, electronics housing, electrical connector, packaging film, optical film, substrate film, or film laminate.

## Patentansprüche

1. Ein Phosphinatcopolycarbonat umfassend Einheiten der Formel 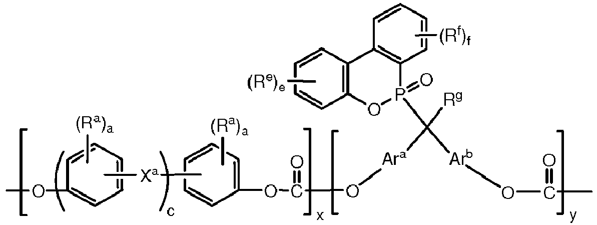 worin
jedes R^{a} unabhängig voneinander ein Halogenatom, C₁₋₁₀ Alkyl, C₁₋₁₀ Haloalkyl, C₁₋₁₂ Alkoxy, C₆₋₁₀ Aryl, oder C₆₋₁₂ Haloaryl ist;
jedes X^{a} unabhängig voneinander eine Einfachbindung, -O-, -S-, -S(O)-, -S(O)₂-, - C(O)-, C₃₋₁₈ Cycloalkyliden; ein C₁₋₂₅ Alkyliden der Formel -C(R^{c})(R^{d})-, worin R^{c} und R^{d} unabhängig voneinander jeweils Wasserstoff, C₁₋₁₂ Alkyl, C₁₋₁₂ Cycloalkyl, C₇₋₁₂ Arylalkyl, C₁₋₁₂ Heteroalkyl, oder cyclisches C₇₋₁₂ Heteroalkyl sind; oder eine Gruppe der Formel -C(=R^{h})-, worin R^{h} eine zweiwertige C₁₋₁₂ Kohlenwasserstoffgruppe ist; ist;
R^{e} und R^{f} unabhängig voneinander ein Wasserstoffatom, C₁₋₁₀ Alkyl, C₁₋₁₀ Haloalkyl, C₁₋₁₀ Alkoxy, C₁₋₁₀ Haloalkoxy, C₂₋₁₀ Alkenyl, oder C₃₋₁₀ Cycloalkyl sind;
jedes R^{g} ein substituiertes oder unsubstituiertes C₆₋₁₈ Aryl, C₁₋₁₀ Alkyl, C₁₋₁₀ Haloalkyl, C₁₋₁₀ Alkoxy, C₁₋₁₀ Haloalkoxy, C₂₋₁₀ Alkenyl, C₃₋₁₀ Cycloalkyl, C₆₋₁₀ Aryl, oder C₆₋₁₂ Haloaryl ist;
Ar³ und Ar^{b} unabhängig voneinander gleich oder verschieden C₆₋₁₈ Aryl sind;
a, e und f jeweils unabhängig voneinander 0 bis 4, oder 0 bis 2, oder 0 sind;
c 0 oder 1 ist; und
x und y das Molverhältnis jeder Einheit im Phosphinatcopolycarbonat darstellen und 0,5:99,5 bis 99,5:0,5, oder 1:99 bis 99:1, oder 10:90 bis 90:10, oder 20:80 bis 80:20 sind.

2. Das Phosphinatcopolycarbonat gemäß Anspruch 1, worin Ar^{a} und Ar^{b} jeweils unabhängig voneinander gemäß den Formeln sind 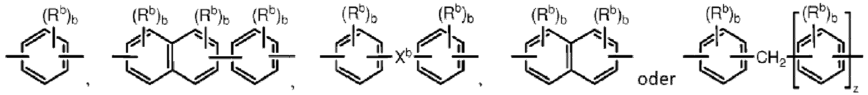 worin in den vorstehenden Formeln
jedes R^{b} unabhängig voneinander ein Halogenatom, Hydroxyl, Amino, Nitro, Thiol, Carboxyl, Sulfato, -COH, -NHCOCH₃, C₁₋₁₀ Alkyl, C₁₋₁₀ Haloalkyl, C₃₋₁₀ Cycloalkyl, C₁₋₁₂ Alkoxy, C₁₋₁₂ Haloalkoxy, C₆₋₁₂ Aryl, C₆₋₁₂ Haloaryl, oder Glycidyl ist;
X^{b} eine kovalente Bindung, -CH₂-(CH₂)ₚ-CH₂-, -C(O)-, -S(O₂)-, -O-, oder -NH- ist;
b 0 bis 4, oder 0 bis 2, oder 0 ist; und
p und z jeweils unabhängig voneinander 1 bis 20, 1 bis 10 oder 1 bis 6 sind.

3. Das Phosphinatcopolycarbonat gemäß Anspruch 1 oder 2, das Einheiten der Formel 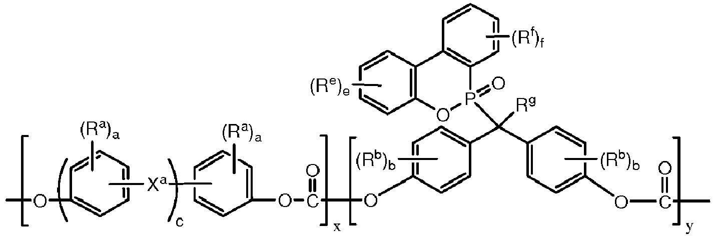 umfasst,
worin
jedes R^{b} unabhängig voneinander ein Halogenatom, Hydroxyl, C₁₋₆ Alkyl, C₁₋₆ Haloalkyl, C₃₋₇ Cycloalkyl, C₁₋₆ Alkoxy, C₁₋₆ Haloalkoxy, C₆₋₁₂ Aryl, C₆₋₁₂ Haloaryl, oder Glycidyl ist;
jedes R^{g} ein substituiertes oder unsubstituiertes C₆₋₁₂ Aryl oder C₁₋₆ Alkyl, bevorzugt ein unsubstituiertes C₆ Aryl oder C₁₋₄ Alkyl ist;
a, b, e und f jeweils unabhängig voneinander 0 bis 2, bevorzugt 0, sind;
c 1 ist; und
x und y das Molverhältnis jeder Einheit im Phosphinatcopolycarbonat darstellen und 50:50 bis 90:10, oder 50:50 bis 80:20 sind.

4. Das Phosphinatcopolycarbonat gemäß einem oder mehreren der Ansprüche 1 bis 3, das Einheiten der Formel 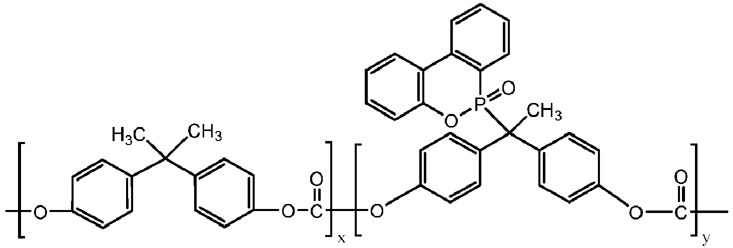 umfasst, wobei x und y das Molverhältnis jeder Einheit im Phosphinatcopolycarbonat darstellen und 60:40 bis 90:10, oder 60:40 bis 80:20 sind.

5. Das Phosphinatcopolycarbonat gemäß einem oder mehreren der Ansprüche 1 bis 4, wobei das Phosphinatcopolycarbonat ein oder mehrere der folgenden Eigenschaften aufweist:
ein gewichtsmittleres Molekulargewicht von 10 000 bis 40 000 Gramm pro Mol oder 15 000 bis 30 000 Gramm pro Mol, wie in der Beschreibung angegeben bestimmt;
eine UL94-Einstufung von V0 bei einer Dicke von 0,8 Millimetern oder bei einer Dicke von 0,4 Millimetern, gemessen durch den UL94-Brennbarkeitstest; und
eine Absorption bei 400 Nanometern von weniger als 0,5, oder weniger als 0,25, oder weniger als 0,1 bei einer Konzentration von 500 Milligramm pro Milliliter in Dichlormethan und einer Weglänge von 10 cm, gemessen durch Absorptionsspektroskopie im ultravioletten und sichtbaren Bereich.

6. Ein Verfahren zur Herstellung des Phosphinatcopolycarbonats gemäß einem oder mehreren der Ansprüche 1 bis 5, wobei das Verfahren
das Copolymerisieren einer aromatischen Dihydroxyverbindung und eines Phosphinatbisphenols der Formeln 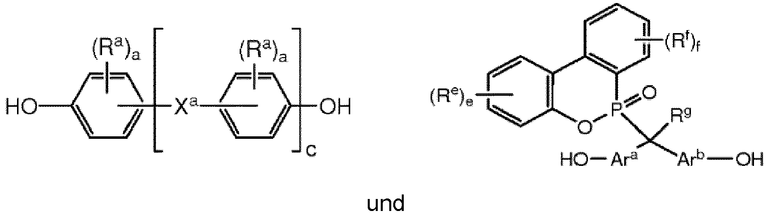 in der Gegenwart eines Carbonatvorläufers unter wirksamen Bedingungen umfasst, die das Phosphinatcopolycarbonat bereitstellen.

7. Das Verfahren gemäß Anspruch 6, wobei das Verfahren das Copolymerisieren der aromatischen Dihydroxyverbindung und des Phosphinatbisphenols der Formel 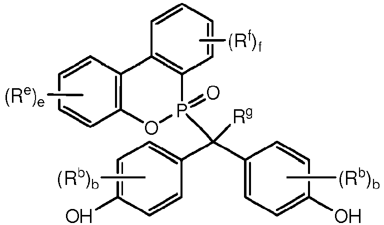 in der Gegenwart eines Carbonatvorläufers unter wirksamen Bedingungen, die das Phosphinatbisphenol zur Verfügung stellen, umfasst, wobei
jedes R^{b} unabhängig voneinander ein Halogenatom, Hydroxyl, C₁₋₆ Alkyl, C₁₋₆ Haloalkyl, C₃₋₇ Cycloalkyl, C₁₋₆ Alkoxy, C₁₋₆ Haloalkoxy, C₆₋₁₂ Aryl, C₆₋₁₂ Haloaryl, oder Glycidyl ist;
jedes R^{g} ein substituiertes oder unsubstituiertes C₆₋₁₂ Aryl oder C₁₋₆ Alkyl, bevorzugt ein unsubstituiertes C₆ Aryl oder C₁₋₄ Alkyl, ist;
a, b, e und f jeweils unabhängig voneinander 0 bis 2, bevorzugt 0 sind; und
c 0 oder 1, bevorzugt 1, ist.

8. Das Verfahren gemäß Anspruch 7, wobei das Verfahren das Copolymerisieren von Bisphenol A und eines Phosphinatbisphenols der Formel 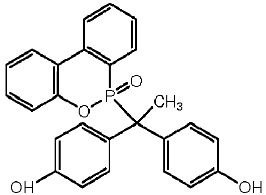 in Gegenwart eines Carbonatvorläufers unter Bedingungen, die wirksam sind, das Phosphinatbisphenol zur Verfügung zu stellen, umfasst.

9. Das Verfahren gemäß einem oder mehreren der Ansprüche 6 bis 8, wobei das Copolymerisieren ein Grenzflächenverfahren ist, das in Gegenwart eines Katalysators durchgeführt wird, oder ein Schmelzverfahren, das in Gegenwart eines Katalysators durchgeführt wird;
vorzugsweise wobei das Copolymerisieren ein Grenzflächenverfahren ist, das in der Gegenwart eines Katalysators durchgeführt wird, wobei eine alkalische Lösung des Phosphinatbisphenols der aromatischen Dihydroxyverbindung zugesetzt wird, nachdem ein Teil des Carbonatvorläufers mit der aromatischen Dihydroxyverbindung in Kontakt gebracht wurde.

10. Das Verfahren gemäß einem oder mehreren der Ansprüche 6 bis 9, das weiterhin die Herstellung des Phosphinatbisphenols durch ein Verfahren umfasst, das die Schritte umfasst:
Umsetzen eines Wasserstoffphosphinats der Formel 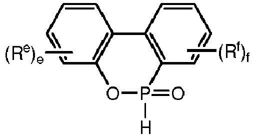 mit einem 4-Hydroxyphenon und einem Phenol der Formeln 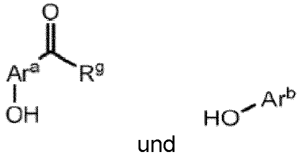 unter Bedingungen, die wirksam sind, um das Phosphinatbisphenol der Formel 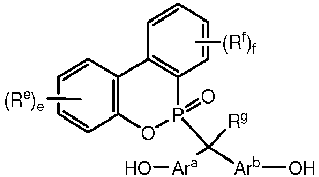 zur Verfügung zu stellen.

11. Das Verfahren gemäß Anspruch 10, das die Herstellung des Phosphinatbisphenols durch ein Verfahren umfasst, das die Schritte umfasst:
Umsetzen eines Wasserstoffphosphinats der Formel 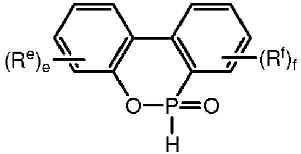 mit einem 4-Hydroxyphenon und einem Phenol der Formeln 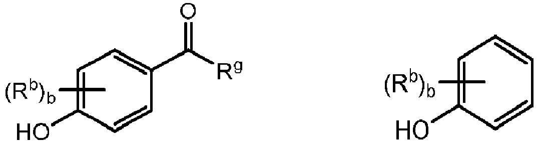 unter Bedingungen, die wirksam sind, das Phosphinatbisphenol der Formel 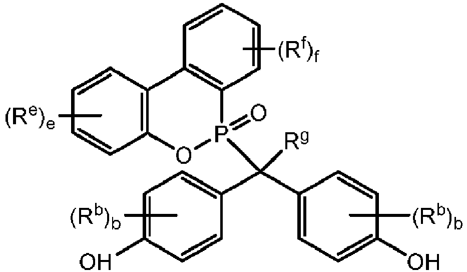 zur Verfügung zu stellen.

12. Das Verfahren gemäß Anspruch 11, das die Schritte umfasst
Umsetzen eines Wasserstoffphosphinats der Formel 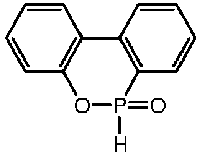 mit einem 4-Hydroxyacetophenon und einem Phenol der Formeln 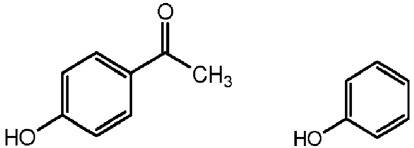 unter Bedingungen, die wirksam sind, das Phosphinatbisphenol der Formel 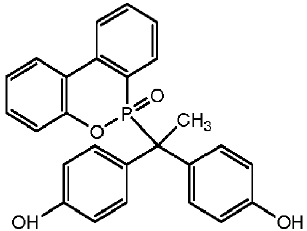 zur Verfügung zu stellen.

13. Eine Copolycarbonatzusammensetzung umfassend das Phosphinatcopolycarbonat gemäß einem der Ansprüche 1 bis 5;
gegebenenfalls ein weiteres Polymer, das nicht das gleiche wie das Copolycarbonat ist; und
gegebenenfalls eine Additivzusammensetzung.

14. Ein Gegenstand umfassend die Copolycarbonatzusammensetzung gemäß Anspruch 13;
gegebenenfalls mit einer Wanddicke von weniger als 4,0 Millimetern, weniger als 2,0 Millimetern, weniger als 1,5 Millimetern, weniger als 0,8 Millimetern oder weniger als 0,4 Millimetern;
vorzugsweise wobei der Gegenstand durch ein Verfahren hergestellt wird, das Molding, Extrudieren und/oder Formen der Copolycarbonatzusammensetzung zum Bilden des Gegenstandes umfasst.

15. Der Gegenstand gemäß Anspruch 14, wobei der Gegenstand eine Linse, eine Abdeckung für eine Beleuchtungsvorrichtung, eine Linse für eine Beleuchtungsvorrichtung, eine Linsenhalterung, ein Kfz-Licht, eine Taschenlampe, eine Glühbirne, eine Kamera, eine Handykamera, ein Bildschirm, eine Schutzbrille, ein Visier, eine medizinische Vorrichtung, ein Gesichtsschutz, ein Tierkäfig, ein Lichtleiter, eine Signalanzeige, ein Wellenleiterelement, eine Glasfaser, ein Reflektor, ein Kollimator, ein Behälter, ein Gehäuse für eine Lichtquelle, eine Lampenlünette, ein Lampenhalter, eine Lampenabdeckung, eine Verglasung, ein Teil eines Haushaltsgerätes, ein Computergehäuse, ein Geschäftsmaschinengehäuse, ein Elektronikgehäuse, eine elektrische Verbindung, eine Verpackungsfolie, ein optischer Film, eine Substratfolie oder ein Folienlaminat ist.

## Revendications

1. Phosphinate-copolycarbonate comprenant des motifs de formule 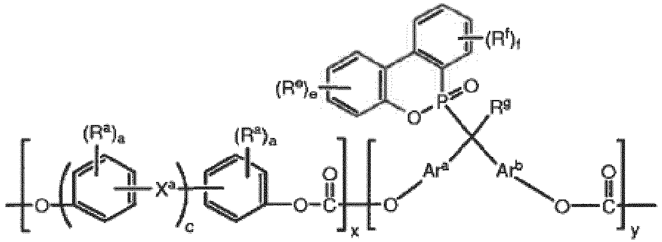 dans lequel
chaque R^{a} est indépendamment un atome d'halogène, un alkyle en C₁₋₁₀, halogénoalkyle en C₁₋₁₀, alcoxy en C₁₋₁₂, aryle en C₆₋₁₀, ou halogénoaryle en C₆₋₁₂ ;
chaque X^{a} est indépendamment une liaison simple, -O-, -S-, -S(O)-, -S(O)₂-, -C(O), un cycloalkylidène en C₃₋₁₈ ; un alkylidène en C₁₋₂₅ de formule -C(R^{c})(R^{d})- où R^{c} et R^{d} sont chacun indépendamment un atome d'hydrogène, un alkyle en C₁₋₁₂, cycloalkyle en C₁₋₁₂, arylalkyle en C₇₋₁₂, hétéroalkyle en C₁₋₁₂, ou hétéroarylalkyle cyclique en C₇₋₁₂ ; ou un groupe de formule -C(=R^{h})- où R^{h} est un groupe hydrocarboné divalent en C₁₋₁₂;
R^{e} et R^{f} sont indépendamment un atome d'halogène, un alkyle en C₁₋₁₀, halogénoalkyle en C₁₋₁₀, alcoxy en C₁₋₁₀, halogénoalcoxy en C₁₋₁₀, alcényle en C₂₋₁₀, ou cycloalkyle en C₃₋₁₀ ;
chaque R^{g} est un aryle en C₆₋₁₈, alkyle en C₁₋₁₀, halogénoalkyle en C₁₋₁₀, alcoxy en C₁₋₁₀, halogénoalcoxy en C₁₋₁₀, alcényle en C₂₋₁₀, cycloalkyle en C₃₋₁₀, aryle en C₆₋₁₀, ou halogénoaryle en C₆₋₁₂ substitué ou non substitué ;
Ar^{a} et Ar^{b} sont chacun indépendamment un aryle en C₆₋₁₈ identique ou différent ;
a, e et f sont chacun indépendamment 0 à 4, ou 0 à 2, ou 0 ;
c est 0 ou 1 ; et
x et y représentent le rapport molaire de chaque motif dans le phosphinate-copolycarbonate, et sont 0,5:99,5 à 99,5:0,5, ou 1:99 à 99:1, ou 10:90 à 90:10, ou 20:80 à 80:20.

2. Phosphinate-copolycarbonate selon la revendication 1, dans lequel Ar^{a} et Ar^{b} sont chacun indépendamment de formules 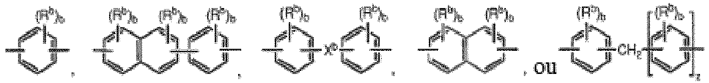 dans lequel dans les formules ci-dessus,
chaque R^{b} est indépendamment un atome d'halogène, un hydroxyle, amino, nitro, thiol, carboxyle, sulfato, -COH, -NHCOCH₃, un alkyle en C₁₋₁₀, halogénoalkyle en C₁₋₁₀, cycloalkyle en C₃₋₁₀, alcoxy en C₁₋₁₂, halogénoalcoxy en C₁₋₁₂, aryle en C₆₋₁₂, halogénoaryle en C₆₋₁₂ ou glycidyle ;
X^{b} est une liaison covalente, -CH₂-(CH₂)ₚ-CH₂-, -C(O)-, -S(O)₂-, -O-, ou -NH-;
b est 0 à 4, ou 0 à 2, ou 0 ; et
p et z sont chacun indépendamment 1 à 20, 1 à 10, ou 1 à 6.

3. Phosphinate-copolycarbonate selon la revendication 1 ou 2, comprenant des motifs de formule 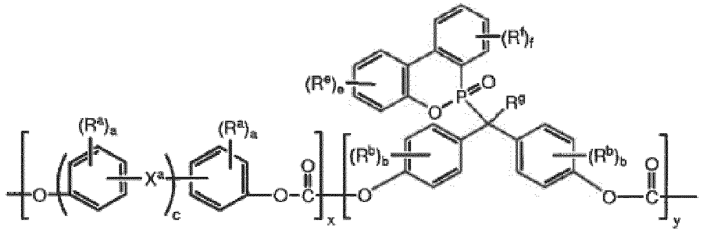 dans lequel
chaque R^{b} est indépendamment un atome d'halogène, un hydroxyle, alkyle en C₁₋₆, halogénoalkyle en C₁₋₆, cycloalkyle en C₃₋₇, alcoxy en C₁₋₆, halogénoalcoxy en C₁₋₆, aryle en C₆₋₁₂, halogénoaryle en C₆₋₁₂, ou glycidyle ;
chaque R^{g} est un aryle en C₆₋₁₂ ou alkyle en C₁₋₆ substitué ou non substitué, de préférence un aryle en C₆ ou alkyle en C₁₋₄ non substitué ;
a, b, e et f sont chacun indépendamment 0 à 2, de préférence 0 ;
c est 1 ; et
x et y représentent le rapport molaire de chaque motif dans le phosphinate-copolycarbonate, et sont 50:50 à 90:10, ou 50:50 à 80:20.

4. Phosphinate-copolycarbonate selon l'une quelconque ou plusieurs des revendications 1 à 3, comprenant des motifs de formule 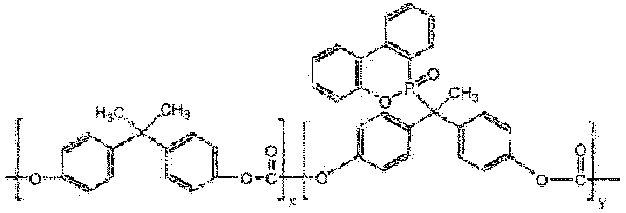 dans lequel x et y représentent le rapport molaire de chaque motif dans le phosphinate-copolycarbonate et sont 60:40 à 90:10, ou 60:40 à 80:20.

5. Phosphinate-copolycarbonate selon l'une quelconque ou plusieurs des revendications 1 à 4, dans lequel le phosphinate-copolycarbonate présente l'une ou plusieurs parmi
un poids moléculaire moyen en poids de 10 000 à 40 000 grammes par mole, ou de 15 000 à 30 000 grammes par mole, déterminé comme indiqué dans la description ;
un classement UL94 de V0 à une épaisseur de 0,8 millimètre, ou à une épaisseur de 0,4 millimètre, mesuré par le test d'inflammabilité UL94 ; et
une absorbance à 400 nanomètres inférieure à 0,5, ou inférieure à 0,25, ou inférieure à 0,1 à une concentration de 500 milligrammes par millilitre dans le dichlorométhane et une longueur de trajet de 10 cm, mesurée par spectroscopie d'absorbance ultraviolet-visible.

6. Procédé de production du phosphinate-copolycarbonate selon l'une quelconque ou plusieurs des revendications 1 à 5, le procédé comprenant
la copolymérisation d'un composé dihydroxy aromatique et d'un phosphinate bisphénol de formules 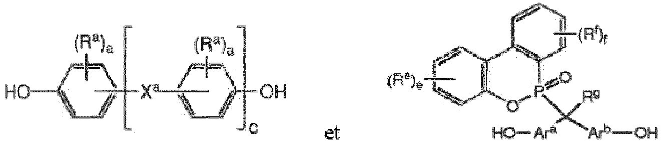 en présence d'un précurseur de carbonate, dans des conditions efficaces pour obtenir le phosphinate-copolycarbonate.

7. Procédé selon la revendication 6, le procédé comprenant
la copolymérisation du composé dihydroxy aromatique et d'un phosphinate bisphénol de formule 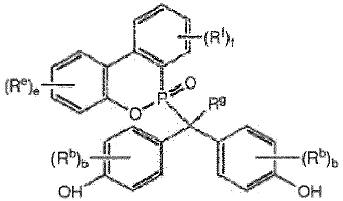 en présence d'un précurseur de carbonate, dans des conditions efficaces pour obtenir le phosphinate bisphénol, dans lequel
chaque R^{b} est indépendamment un atome d'halogène, un hydroxyle, un alkyle en C₁₋₆, halogénoalkyle en C₁₋₆, cycloalkyle en C₃₋₇, alcoxy en C₁₋₆, halogénoalcoxy en C₁₋₆, aryle en C₆₋₁₂, halogénoaryle en C₆₋₁₂, ou glycidyle ;
chaque R^{g} est un aryle en C₆₋₁₂ ou alkyle en C₁₋₆ substitué ou non substitué, de préférence un aryle en C₆ ou alkyle en C₁₋₄ non substitué ;
a, b, e et f sont chacun indépendamment 0 à 2, de préférence 0 ; et
c est 0 ou 1 ; de préférence 1.

8. Procédé selon la revendication 7, le procédé comprenant la copolymérisation de bisphénol A et d'un phosphinate bisphénol de formule 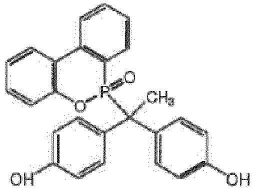 en présence d'un précurseur de carbonate, dans des conditions efficaces pour obtenir le phosphinate bisphénol.

9. Procédé selon l'une quelconque ou plusieurs des revendications 6 à 8, dans lequel la copolymérisation est un procédé interfacial conduit en présence d'un catalyseur ou un procédé à l'état fondu conduit en présence d'un catalyseur ;
de préférence dans lequel la copolymérisation est un procédé interfacial conduit en présence d'un catalyseur, dans lequel une solution caustique du phosphinate bisphénol est ajoutée au composé dihydroxy aromatique après qu'une partie du précurseur de carbonate est mise en contact avec le composé dihydroxy aromatique.

10. Procédé selon l'une quelconque ou plusieurs des revendications 6 à 9, comprenant en outre la production du phosphinate bisphénol par un procédé comprenant :
la réaction d'un phosphinate d'hydrogène de formule 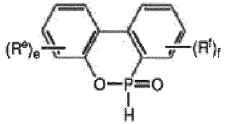 avec une 4-hydroxyphénone et un phénol de formules 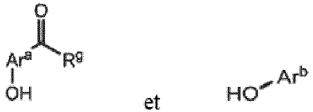 dans des conditions efficaces pour obtenir le phosphinate bisphénol de formule

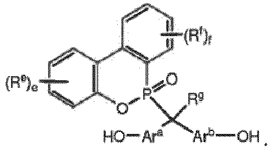

11. Procédé selon la revendication 10, comprenant la production du phosphinate bisphénol par un procédé comprenant :
la réaction d'un phosphinate d'hydrogène de formule 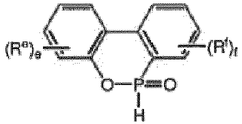 avec une 4-hydroxyphénone et un phénol de formules 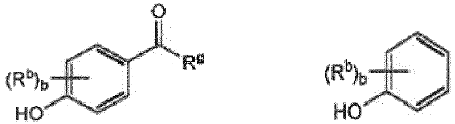 dans des conditions efficaces pour obtenir le phosphinate bisphénol de formule

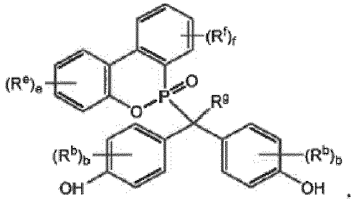

12. Procédé selon la revendication 11, comprenant la réaction d'un phosphinate d'hydrogène de formule 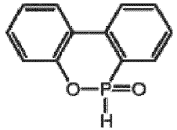 avec une 4-hydroxyacétophénone et un phénol de formules 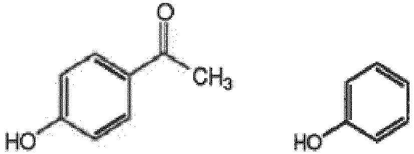 dans des conditions efficaces pour obtenir le phosphinate bisphénol de formule

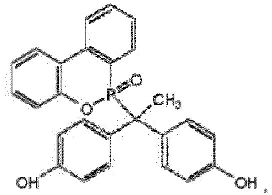

13. Composition de copolycarbonate, comprenant le phosphinate-copolycarbonate selon l'une quelconque des revendications 1 à 5 ; éventuellement un autre polymère qui n'est pas identique au copolycarbonate ; et éventuellement une composition d'additifs.

14. Article comprenant la composition de copolycarbonate selon la revendication 13 ;
ayant éventuellement une épaisseur de paroi inférieure à 4,0 millimètres, inférieure à 2,0 millimètres, inférieure à 1,5 millimètre, inférieure à 0,8 millimètre, ou inférieure à 0,4 millimètre ;
de préférence dans lequel l'article est fabriqué par un procédé comprenant le moulage, l'extrusion, et/ou le façonnage de la composition de copolycarbonate pour former l'article.

15. Article selon la revendication 14, dans lequel l'article est une lentille, un couvercle pour dispositif d'éclairage, une lentille pour dispositif d'éclairage, un support de lentille, un phare d'automobile, une lampe de poche, une ampoule, un appareil photo, un appareil photo de téléphone portable, un écran d'affichage, des lunettes de sécurité, un viseur, un dispositif médical, un masque facial, une cage d'animal, un guide-lumière, un indicateur de signal, un élément de guide à onde, une fibre optique, un réflecteur, un collimateur, un récipient, un boîtier pour source de lumière, un feu antibrouillard, un support de lampe, un couvercle de lampe, un vitrage, une pièce d'appareil électroménager, un boîtier d'ordinateur, un carter de machine, un boîtier électronique, un connecteur électrique, un film d'emballage, un film optique, un film de subtrat, ou un stratifié de film.
